# EUROPEAN PATENT APPLICATION

(11) **EP 4 503 262 A1**
(43) Date of publication of application: **05.02.2025**
(21) Application number: 23780798.7
(22) Date of filing: 29.03.2023
(51) Int. Cl.: H01M 10/54, C22B 1/00, C22B 7/00

(54) **METHOD FOR RECOVERING ACTIVE MATERIAL FROM POWER STORAGE APPARATUS**

(30) Priority: 31.03.2022 JP 2022060609
(71) Applicant: Central Research Institute of Electric Power Industry, Chiyoda-ku Tokyo 100-8126 (JP)
(72) Inventor: DATE, Yasumoto, Tokyo 100-8126 (JP)
(74) Representative: Epping - Hermann - Fischer
(86) International application number: PCT/JP2023/013021
(87) International publication number: WO 2023/190790

(57) **Abstract**

A method for recovering an active material from a power storage device includes a processing step of processing at least a part of an electrode of a power source device including the electrode to which an active material adheres, such that the part becomes a corrugated shape.

## Description

### TECHNICAL FIELD

The present invention relates to a method for recovering an active material from a power storage device.

### BACKGROUND ART

Along with the electrification of automobiles and the expansion of the use of renewable energy, the use of lithium-ion batteries, which are one type of power storage device, is increasing because of their excellent power storage performance. The resource value of cobalt, nickel, and the like used in the lithium-ion batteries fluctuates greatly, and it is expected that their supply will be secured by recycling.

Since the resource value of lithium-ion batteries is lower than that of conventional nickel-metal hydride batteries on a whole-battery basis, a recycling process with a lower energy input is desired. Examples of the recycling process include a roasting process in which the battery is incinerated in a roasting furnace, a melting process in which the battery is melted, and a non-roasting process in which the battery is not incinerated in a roasting furnace. The main recycling process for lithium-ion batteries in Japan is the roasting process.

However, since the roasting process and the melting process treat the battery at a high temperature, there is a problem that a large amount of carbon dioxide is generated due to consumption of fossil fuels such as natural gas and heavy oil, and electric energy, and thermal cracking of organic electrolytic solutions and plastics that are the constituents of the battery. In addition, since the roasting process and the melting process treat the materials at a high temperature, a major part of the materials recovered from the battery are oxidized and mixed, which makes it difficult to separate the materials, and there are problems such as less types of recyclable active materials than by the non-roasting process and a decrease in the value of the material.

Meanwhile, various non-roasting recycling technologies for lithium-ion batteries that do not rely on incineration have been studied mainly in Europe, where avoiding incineration of batteries is preferred. For example, a known method strips the active material from the electrode by cutting the electrode of the lithium-ion battery with a mill cutter or the like, applying an airflow to the cut electrode, and causing the electrode to collide in a container (for example, NPL 1).

Another known method strips the active material from the electrode by dispersing the electrode in water and agitating it in a water flow (for example, NPL 2).

However, in the method described in NPL 1, there are problems that the electrode needs to be cut into approximately 10 mm in order to efficiently strip the active material, that the active material stripping rate is low when the active material adheres firmly to the electrode, and that the electrode deforms and becomes minute every time the electrode collides in a long-time treatment, making it impossible to recover the active material efficiently (because of causing contamination of impurities such as aluminum, copper, and the like, to necessitate a complicated process for separation).

In the method described in NPL 2, there is no restriction on the size into which the electrode is cut, and the active material with less impurities can be efficiently recovered without the electrode being deformed or becoming minute during the stripping. However, in the case where the active material adheres firmly to the electrode, there are problems such as the low active material stripping rate, and the cost due to use of water in the process.

### CITATION LIST

### NON PATENT LITERATURE

NPL 1: https://www. duesenfeld. com/recycling_en. Html
NPL 2: FY 2018 Verification Project for CO2 Saving-type Equipment Technology for Recycling, etc. "Verification Project for Development of Technology for Reuse and Recycling of Electric Vehicle-Driving Batteries (Chubu Electric Power Company, Incorporated)", the Ministry of the Environment, February 28, 2019

### SUMMARY OF THE INVENTION

### TECHNICAL PROBLEM

The present invention aims for solving the foregoing problems in the related art and achieving the following object. That is, it is an object of the present invention to provide a method for recovering an active material from a power storage device, which can recover the active material from the power storage device with a high efficiency and a high purity.

According to the present invention, it is possible to strip off an active material from an electrode easily by processing the electrode into a corrugated shape.

Further, because an electrode that is processed into a shape that hardly deforms even when the electrode collides would not deform in an airflow process, an active material adhering to a central portion of the electrode can be stripped off even if the electrode is a relatively large-sized electrode greater than 10 mm, which has been used so far, and the recovery rate of the active material can be increased. Further, since it is possible to inhibit a metal foil from becoming minute, the active material to be recovered can be inhibited from impurity contamination.

Further, when the electrode of the power storage device is a multilayer structure, the layers can be stripped off from each other into single layers, making it possible to perform the subsequent steps (a material sorting step, and the like) easily.

### SOLUTION TO THE PROBLEM

The means for solving the above problem are as follows.
<1> A method for recovering an active material from a power storage device, the method including:
   a processing step of processing at least a part of an electrode of a power storage device including the electrode to which an active material adheres, such that the part becomes a corrugated shape.
<2> The method for recovering an active material from a power storage device according to <1>, the method including after the processing step:
   a stripping step of stripping the active material from the electrode by applying an external stimulus to the electrode.
<3> The method for recovering an active material from a power storage device according to <2>,
   wherein the corrugated shape is at least one selected from a corrugated shape throughout an entirety, a corrugated shape only at an end, and a corrugated shape in one direction of the entirety and in a direction different from the one direction.
<4> The method for recovering an active material from a power storage device according to any one of <1> to <3>,
   wherein a curvature radius of the corrugated shape is 0 mm or greater and 5 mm or less.
<5> The method for recovering an active material from a power storage device according to any one of <1> to <4>,
   wherein a curvature radius of the corrugated shape is 0 mm or greater and 0.5 mm or less.
<6> The method for recovering an active material from a power storage device according to any one of <2> to <5>,
   wherein the stripping step is performed at 0°C or higher and 200°C or lower.
<7> The method for recovering an active material from a power storage device according to any one of <2> to <6>,
   wherein the external stimulus is an airflow.
<8> The method for recovering an active material from a power storage device according to <7>,
   wherein the airflow is applied to the electrode at a wind velocity of 5 m/s or higher and 100 m/s or lower and for a time of 0.5 minutes or longer and 2.0 minutes or shorter.
<9> The method for recovering an active material from a power storage device according to any one of <2> to <6>,
   wherein the external stimulus is a water flow.
<10> The method for recovering an active material from a power storage device according to <9>,
   wherein the water flow is applied to the electrode at a flow velocity of 0.05 m/s or higher and 10 m/s or lower and for a time of 0.1 minutes or longer and 5.0 minutes or shorter.
<11> The method for recovering an active material from a power storage device according to any one of <2> to <6>,
   wherein the external stimulus is a shock wave.
<12> The method for recovering an active material from a power storage device according to <11>,
   wherein the shock wave is applied to the electrode at an applied voltage of n 10 kV or higher and 200 kV or lower, at a distance of 0.5 cm or longer and 30 cm or shorter between the electrode and a paired electrode of an electric pulse device, and at a number of times of pulsing of 1 or greater and 100 or less.

### ADVANTAGEOUS EFFECTS OF THE INVENTION

According to the present invention, it is possible to provide a method for recovering an active material from a power storage device, which can solve various problems in the related art and can recover an active material from a power storage device with a high efficiency and a high purity.

### BRIEF DESCRIPTION OF THE DRAWINGS

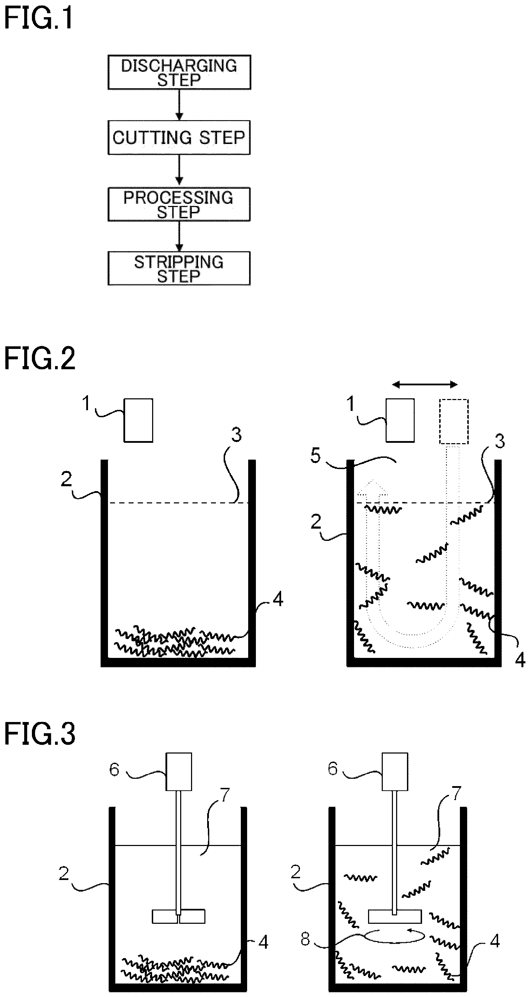

[FIG. 1] FIG. 1 is an example of a flowchart illustrating a method for recovering an active material of the present invention.
[FIG. 2] FIG. 2 is a schematic diagram illustrating an example of an embodiment in which an airflow is used as an external stimulus in the present invention.
[FIG. 3] FIG. 3 is a schematic diagram illustrating an example of an embodiment in which a water flow is used as an external stimulus in the present invention.

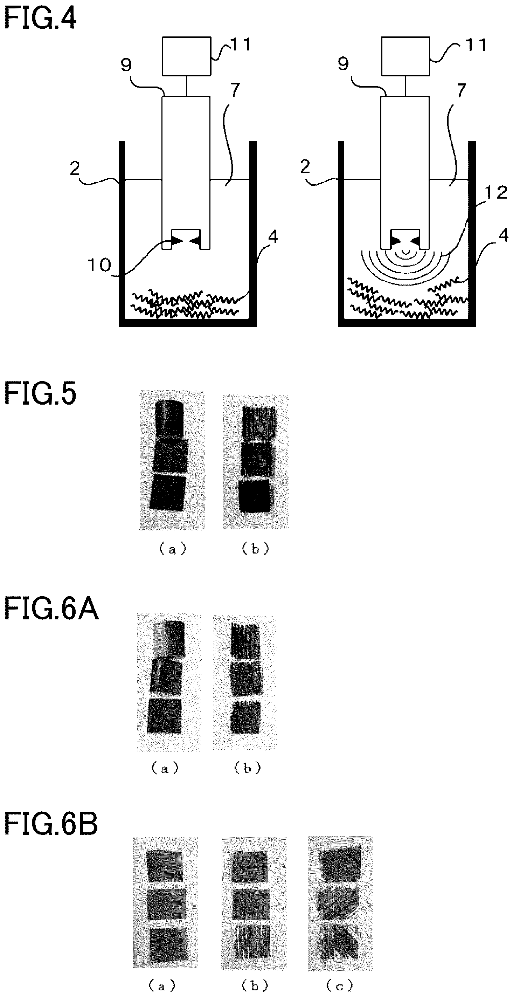

[FIG. 4] FIG. 4 is a schematic diagram illustrating an example of an embodiment in which a shock wave is used as an external stimulus in the present invention.
[FIG. 5] FIG. 5 includes images illustrating the appearance of a recovered active material in Example 1, where FIG. 5 (a) is an electrode before a processing step and FIG. 5 (b) is the electrode after the processing step.
[FIG. 6A] FIG. 6A includes images illustrating the appearance of a recovered active material in Example 2-A, where FIG. 6A is an electrode before a processing step and FIG. 6A (b) is the electrode after the processing step.
[FIG. 6B] FIG. 6B includes images illustrating the appearance of a recovered active material in Example 2-B, where FIG. 6B (a) is an electrode before the processing step, FIG. 6B (b) is the electrode after the processing step in one direction, and FIG. 6B (c) is the electrode after the processing step further in the 45 degree direction.

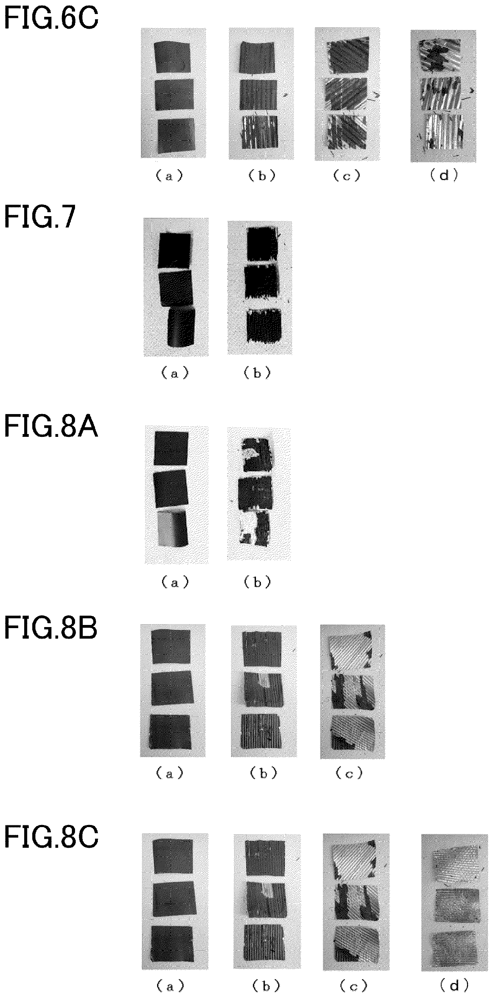

[FIG. 6C] FIG. 6C includes images illustrating the appearance of a recovered active material in Example 2-C, where FIG. 6C (a) is an electrode before a processing step, FIG. 6C (b) is the electrode after the processing step in one direction, FIG. 6C (c) is the electrode after the processing step further in the 45-degree direction, and FIG. 6C (d) is the electrode after the processing step further in the 135-degree direction.
[FIG. 7] FIG. 7 includes images illustrating the appearance of a recovered active material in Example 3, where FIG. 7 (a) is an electrode before a processing step, and FIG. 7 (b) is the electrode after the processing step.
[FIG. 8A] FIG. 8A includes images illustrating the appearance of a recovered active material in Example 4-A, where FIG. 8A (a) is an electrode before a processing step, and FIG. 8A (b) is the electrode after the processing step.
[FIG. 8B] FIG. 8B includes images illustrating the appearance of a recovered active material in Example 4-B, where FIG. 8B (a) is an electrode before a processing step, FIG. 8B (b) is the electrode after the processing step in one direction, and FIG. 8B (c) is the electrode after the processing step further in the 45-degree direction.
[FIG. 8C] FIG. 8C includes images illustrating the appearance of a recovered active material in Example 4-C, where FIG. 8C (a) is an electrode before a processing step, FIG. 8C (b) is the electrode after the processing step in one direction, FIG. 8C (c) is the electrode after the processing step further in the 45-degree direction, and FIG. 8C (d) is the electrode after the processing step further in the 135-degree direction.

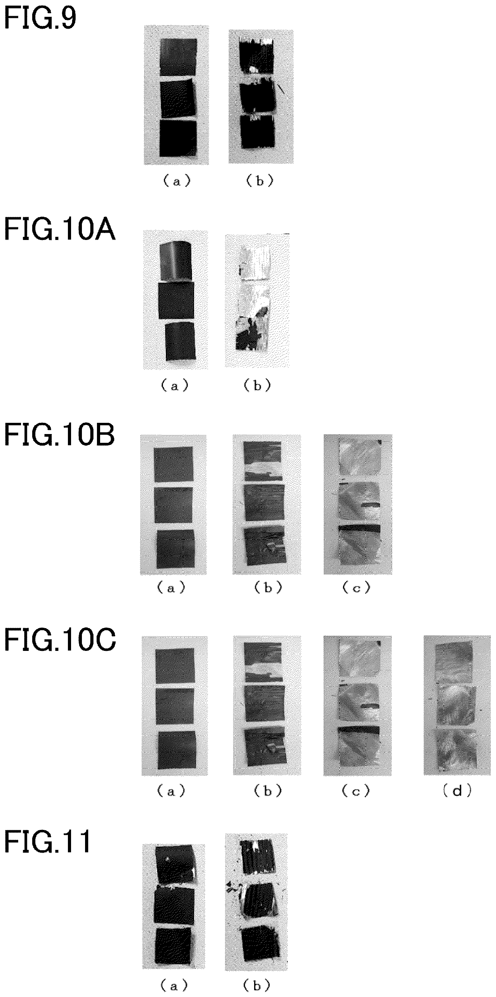

[FIG. 9] FIG. 9 includes images illustrating the appearance of a recovered active material in Example 5, where FIG. 9 (a) is an electrode before a processing step, and FIG. 9 (b) is the electrode after the processing step.
[FIG. 10A] FIG. 10A includes images illustrating the appearance of a recovered active material in Example 6-A, where FIG. 10A (a) is an electrode before a processing step and FIG. 10A (b) is the electrode after the processing step.
[FIG. 10B] FIG. 10B includes images illustrating the appearance of a recovered active material in Example 6-B, where FIG. 10B (a) is an electrode before a processing step, FIG. 10B (b) is the electrode after the processing step in one direction, and FIG. 10B (c) is the electrode after the processing step further in the 45-degree direction.
[FIG. 10C] FIG. 10C includes images illustrating the appearance of a recovered active material in Example 6-C, where FIG. 10C (a) is an electrode before a processing step, FIG. 10C (b) is the electrode after the processing step in one direction, FIG. 10C (c) is the electrode after the processing step further in the 45-degree direction, and FIG. 10C (d) is the electrode after the processing step further in the 135-degree direction.
[FIG. 11] FIG. 11 includes images illustrating the appearance of a recovered active material in Example 7, where FIG. 11 (a) is an electrode before a processing step, and FIG. 11 (b) is the electrode after the processing step.

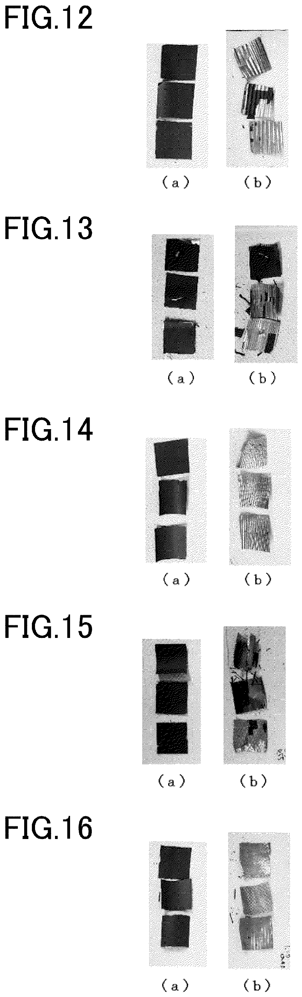

[FIG. 12] FIG. 12 includes images illustrating the appearance of a recovered active material in Example 8, where FIG. 12 (a) is an electrode before a processing step, and FIG. 12 (b) is the electrode after the processing step.
[FIG. 13] FIG. 13 includes images illustrating the appearance of a recovered active material in Example 9, where FIG. 13 (a) is an electrode before a processing step, and FIG. 13 (b) is the electrode after the processing step.
[FIG. 14] FIG. 14 includes images illustrating the appearance of a recovered active material in Example 10, where FIG. 14 (a) is an electrode before a processing step, and FIG. 14 (b) is the electrode after the processing step.
[FIG. 15] FIG. 15 includes images illustrating the appearance of a recovered active material in Example 11, where FIG. 15 (a) is an electrode before a processing step, and FIG. 15 (b) is the electrode after the processing step.
[FIG. 16] FIG. 16 includes images illustrating the appearance of a recovered active material in Example 12, where FIG. 16 (a) is an electrode before a processing step, and FIG. 16 (b) is the electrode after the processing step.

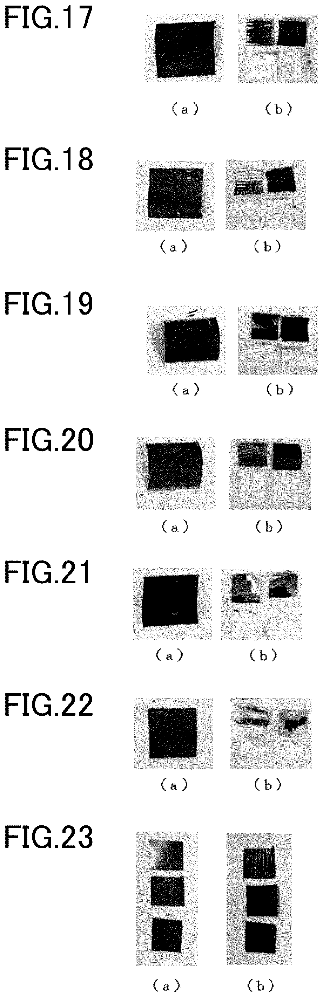

[FIG. 17] FIG. 17 includes images illustrating the appearance of a recovered active material in Example 13, where FIG. 17 (a) is an electrode before a processing step, and FIG. 17 (b) is the electrode after the processing step.
[FIG. 18] FIG. 18 includes images illustrating the appearance of a recovered active material in Example 14, where FIG. 18 (a) is an electrode before a processing step, and FIG. 18 (b) is the electrode after the processing step.
[FIG. 19] FIG. 19 includes images illustrating the appearance of a recovered active material in Example 15, where FIG. 19 (a) illustrates an electrode before a processing step and FIG. 19 (b) illustrates the electrode after the processing step.
[FIG. 20] FIG. 20 includes images illustrating the appearance of a recovered active material in Example 16, where FIG. 20 (a) illustrates an electrode before a processing step and FIG. 20 (b) illustrates the electrode after the processing step.
[FIG. 21] FIG. 21 includes images illustrating the appearance of a recovered active material in Example 17, where FIG. 21 (a) illustrates an electrode before a processing step and FIG. 21 (b) illustrates the electrode after the processing step.
[FIG. 22] FIG. 22 includes images illustrating the appearance of a recovered active material in Example 18, where FIG. 22 (a) illustrates an electrode before a processing step and FIG. 22 (b) illustrates the electrode after the processing step.
[FIG. 23] FIG. 23 includes images illustrating the appearance of a recovered active material in Example 19, where FIG. 23 (a) illustrates an electrode before a processing step and FIG. 23 (b) illustrates the electrode after the processing step.

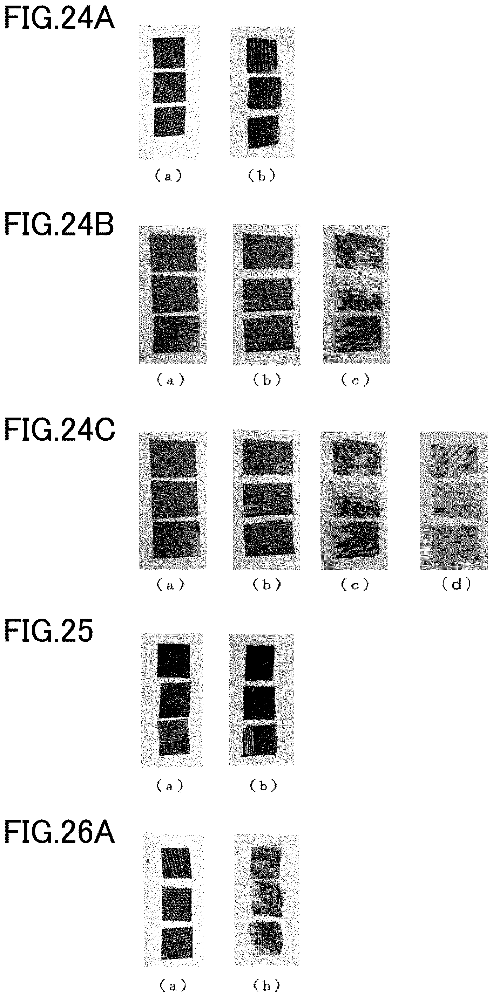

[FIG. 24A] FIG. 24A includes images illustrating the appearance of a recovered active material in Example 20-A, where FIG. 24A (a) is an electrode before a processing step and FIG. 24A (b) is the electrode after the processing step.
[FIG. 24B] FIG. 24B includes images illustrating the appearance of a recovered active material in Example 20-B, where FIG. 24B (a) illustrates an electrode before a processing step, FIG. 24B (b) illustrates the electrode after the processing step in one direction, and FIG. 24B (c) illustrates the electrode after the processing step further in the 45-degree direction.
[FIG. 24C] FIG. 24C includes images illustrating the appearance of a recovered active material in Example 20-C, where FIG. 24C (a) illustrates an electrode before a processing step, FIG. 24C (b) illustrates the electrode after the processing step in one direction, FIG. 24C (c) illustrates the electrode after the processing step further in the 45-degree direction, and FIG. 24C (d) illustrates the electrode after the processing step further in the 135-degree direction.
[FIG. 25] FIG. 25 includes images illustrating the appearance of a recovered active material in Example 21, where FIG. 25 (a) illustrates an electrode before a processing step and FIG. 25 (b) illustrates the electrode after the processing step.
[FIG. 26A] FIG. 26A includes images illustrating the appearance of a recovered active material in Example 22-A, where FIG. 26A (a) illustrates an electrode before a processing step and FIG. 26A (b) illustrates the electrode after the processing step.

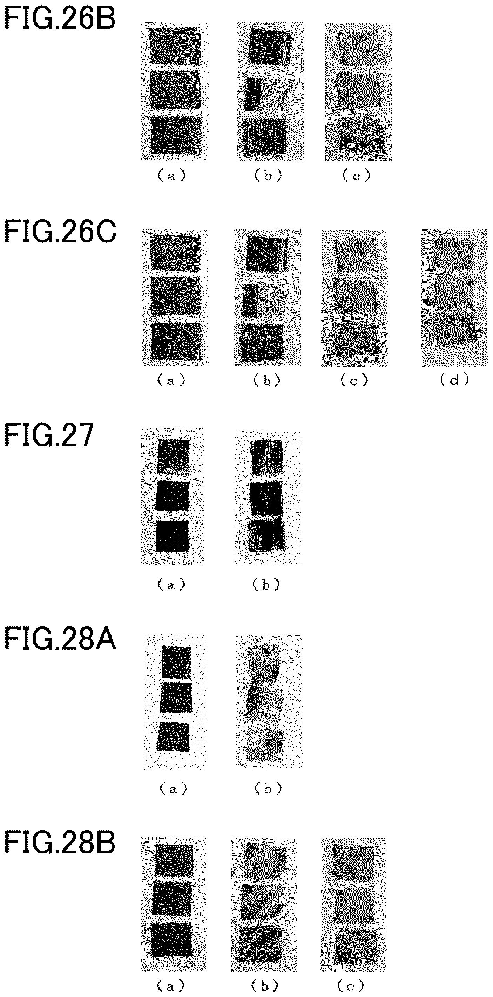

[FIG. 26B] FIG. 26B includes images illustrating the appearance of a recovered active material in Example 22-B, where FIG. 26B (a) illustrates an electrode before a processing step, FIG. 26B (b) illustrates the electrode after the processing step in one direction, and FIG. 26B (c) illustrates the electrode after the processing step further in the 45-degree direction.
[FIG. 26C] FIG. 26C includes images illustrating the appearance of a recovered active material in Example 22-C, where FIG. 26C (a) illustrates an electrode before a processing step, FIG. 26C (b) illustrates the electrode after the processing step in one direction, FIG. 26C (c) illustrates the electrode after the processing step further in the 45-degree direction, and FIG. 26C (d) illustrates the electrode after the processing step further in the 135-degree direction.
[FIG. 27] FIG. 27 includes images illustrating the appearance of a recovered active material in Example 23, where FIG. 27 (a) illustrates an electrode before a processing step, and FIG. 27 (b) illustrates the electrode after the processing step.
[FIG. 28A] FIG. 28A includes images illustrating the appearance of a recovered active material in Example 24-A, where FIG. 28A (a) illustrates an electrode before a processing step, and FIG. 28A (b) illustrates the electrode after the processing step.
[FIG. 28B] FIG. 28B includes images illustrating the appearance of a recovered active material in Example 24-B, where FIG. 28B (a) illustrates an electrode before a processing step, FIG. 28B (b) illustrates the electrode after the processing step in one direction, and FIG. 28B (c) illustrates the electrode after the processing step further in the 45-degree direction.

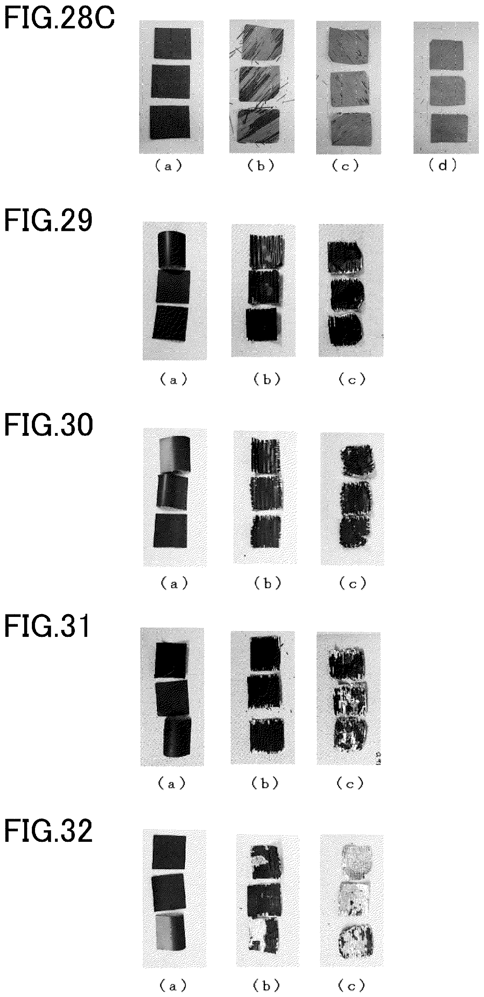

[FIG. 28C] FIG. 28C includes images illustrating the appearance of a recovered active material in Example 24-C, where FIG. 28C (a) illustrates an electrode before a processing step, FIG. 28C (b) illustrates the electrode after the processing step in one direction, FIG. 28C (c) illustrates the electrode after the processing step further in the 45-degree direction, and FIG. 28C (d) illustrates the electrode after the processing step further in the 135-degree direction.
[FIG. 29] FIG. 29 includes images illustrating the appearance of a recovered active material in Example 25, where FIG. 29 (a) illustrates an electrode before a processing step, FIG. 29 (b) illustrates the electrode after the processing step and before a stripping step, and FIG. 29 (c) illustrates the electrode after the stripping step.
[FIG. 30] FIG. 30 includes images illustrating the appearance of a recovered active material in Example 26, where FIG. 30 (a) illustrates an electrode before a processing step, FIG. 30 (b) illustrates the electrode after the processing step and before a stripping step, and FIG. 30 (c) illustrates the electrode after the stripping step.
[FIG. 31] FIG. 31 includes images illustrating the appearance of a recovered active material in Example 27, where FIG. 31 (a) illustrates an electrode before a processing step, FIG. 31 (b) illustrates the electrode after the processing step and before a stripping step, and FIG. 31 (c) illustrates the electrode after the stripping step.
[FIG. 32] FIG. 32 includes images illustrating the appearance of a recovered active material in Example 28, where FIG. 32 (a) illustrates an electrode before a processing step, FIG. 32 (b) illustrates the electrode after the processing step and before a stripping step, and FIG. 32 (c) illustrates the electrode after the stripping step.

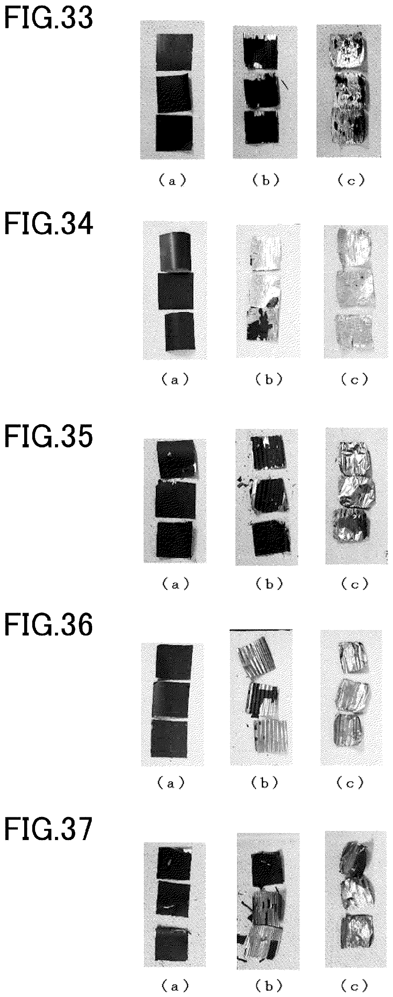

[FIG. 33] FIG. 33 includes images illustrating the appearance of a recovered active material in Example 29, where FIG. 33 (a) illustrates an electrode before a processing step, FIG. 33 (b) illustrates the electrode after the processing step and before a stripping step, and FIG. 33 (c) illustrates the electrode after the stripping step.
[FIG. 34] FIG. 34 includes images illustrating the appearance of a recovered active material in Example 30, where FIG. 34 (a) illustrates an electrode before a processing step, FIG. 34 (b) illustrates the electrode after the processing step and before a stripping step, and FIG. 34 (c) illustrates the electrode after the stripping step.
[FIG. 35] FIG. 35 includes images illustrating the appearance of a recovered active material in Example 31, where FIG. 35 (a) illustrates an electrode before a processing step, FIG. 35 (b) illustrates the electrode after the processing step and before a stripping step, and FIG. 35 (c) illustrates the electrode after the stripping step.
[FIG. 36] FIG. 36 includes images illustrating the appearance of a recovered active material in Example 32, where FIG. 36 (a) illustrates an electrode before a processing step, FIG. 36 (b) illustrates the electrode after the processing step and before a stripping step, and FIG. 36 (c) illustrates the electrode after the stripping step.
[FIG. 37] FIG. 37 includes images illustrating the appearance of a recovered active material in Example 33, where FIG. 37 (a) illustrates an electrode before a processing step, FIG. 37 (b) illustrates the electrode after the processing step and before a stripping step, and FIG. 37 (c) illustrates the electrode after the stripping step.

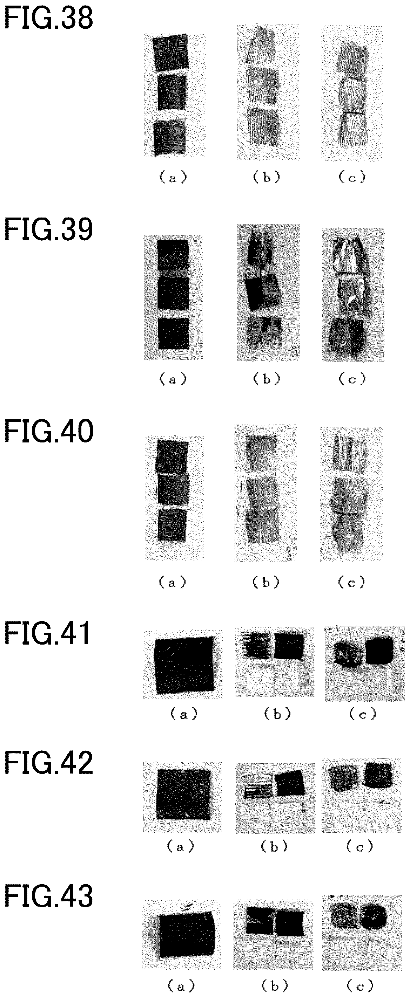

[FIG. 38] FIG. 38 includes images illustrating the appearance of a recovered active material in Example 34, where FIG. 38 (a) illustrates an electrode before a processing step, FIG. 38 (b) illustrates the electrode after the processing step and before a stripping step, and FIG. 38 (c) illustrates the electrode after the stripping step.
[FIG. 39] FIG. 39 includes images illustrating the appearance of a recovered active material in Example 35, where FIG. 39 (a) illustrates an electrode before a processing step, FIG. 39 (b) illustrates the electrode after the processing step and before a stripping step, and FIG. 39 (c) illustrates the electrode after the stripping step.
[FIG. 40] FIG. 40 includes images illustrating the appearance of a recovered active material in Example 36, where FIG. 40 (a) illustrates an electrode before a processing step, FIG. 40 (b) illustrates the electrode after the processing step and before a stripping step, and FIG. 40 (c) illustrates the electrode after the stripping step.
[FIG. 41] FIG. 41 includes images illustrating the appearance of a recovered active material in Example 37, where FIG. 41 (a) illustrates an electrode before a processing step, FIG. 41 (b) illustrates the electrode after the processing step and before a stripping step, and FIG. 41 (c) illustrates the electrode after the stripping step.
[FIG. 42] FIG. 42 includes images illustrating the appearance of a recovered active material in Example 38, where FIG. 42 (a) illustrates an electrode before a processing step, FIG. 42 (b) illustrates the electrode after the processing step and before a stripping step, and FIG. 42 (c) illustrates the electrode after the stripping step.
[FIG. 43] FIG. 43 includes images illustrating the appearance of a recovered active material in Example 39, where FIG. 43 (a) illustrates an electrode before a processing step, FIG. 43 (b) illustrates the electrode after the processing step and before a stripping step, and FIG. 43 (c) illustrates the electrode after the stripping step.

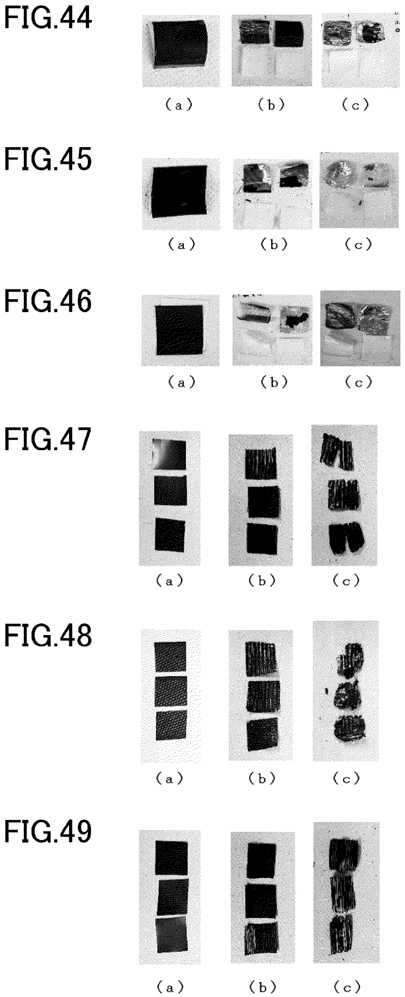

[FIG. 44] FIG. 44 includes images illustrating the appearance of a recovered active material in Example 40, where FIG. 44 (a) illustrates an electrode before a processing step, FIG. 44 (b) illustrates the electrode after the processing step and before a stripping step, and FIG. 44 (c) illustrates the electrode after the stripping step.
[FIG. 45] FIG. 45 includes images illustrating the appearance of a recovered active material in Example 41, where FIG. 45 (a) illustrates an electrode before a processing step, FIG. 45 (b) illustrates the electrode after the processing step and before a stripping step, and FIG. 45 (c) illustrates the electrode after the stripping step.
[FIG. 46] FIG. 46 includes images illustrating the appearance of a recovered active material in Example 42, where FIG. 46 (a) illustrates an electrode before a processing step, FIG. 46 (b) illustrates the electrode after the processing step and before a stripping step, and FIG. 46 (c) illustrates the electrode after the stripping step.
[FIG. 47] FIG. 47 includes images illustrating the appearance of a recovered active material in Example 43, where FIG. 47 (a) illustrates an electrode before a processing step, FIG. 47 (b) illustrates the electrode after the processing step and before a stripping step, and FIG. 47 (c) illustrates the electrode after the stripping step.
[FIG. 48] FIG. 48 includes images illustrating the appearance of a recovered active material in Example 44, where FIG. 48 (a) illustrates an electrode before a processing step, FIG. 48 (b) illustrates the electrode after the processing step and before a stripping step, and FIG. 48 (c) illustrates the electrode after the stripping step.
[FIG. 49] FIG. 49 includes images illustrating the appearance of a recovered active material in Example 45, where FIG. 49 (a) illustrates an electrode before a processing step, FIG. 49 (b) illustrates the electrode after the processing step and before a stripping step, and FIG. 49 (c) illustrates the electrode after the stripping step.

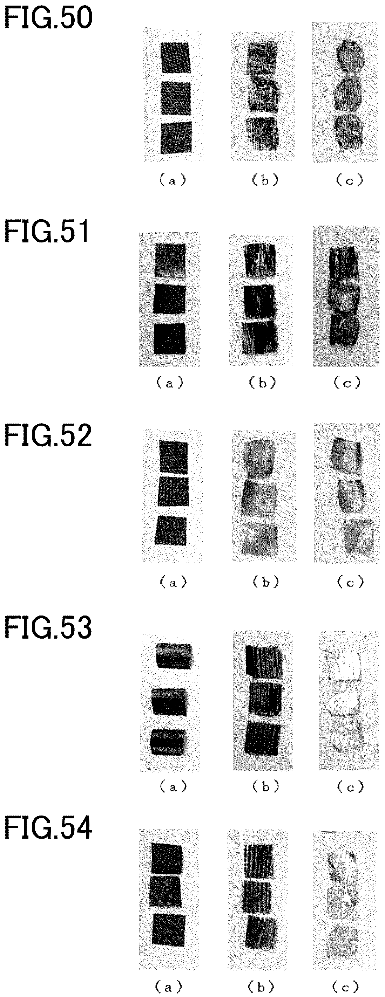

[FIG. 50] FIG. 50 includes images illustrating the appearance of a recovered active material in Example 46, where FIG. 50 (a) illustrates an electrode before a processing step, FIG. 50 (b) illustrates the electrode after the processing step and before a stripping step, and FIG. 50 (c) illustrates the electrode after the stripping step.
[FIG. 51] FIG. 51 includes images illustrating the appearance of a recovered active material in Example 47, where FIG. 51 (a) illustrates an electrode before a processing step, FIG. 51 (b) illustrates the electrode after the processing step and before a stripping step, and FIG. 51 (c) illustrates the electrode after the stripping step.
[FIG. 52] FIG. 52 includes images illustrating the appearance of a recovered active material in Example 48, where FIG. 52 (a) illustrates an electrode before a processing step, FIG. 52 (b) illustrates the electrode after the processing step and before a stripping step, and FIG. 52 (c) illustrates the electrode after the stripping step.
[FIG. 53] FIG. 53 includes images illustrating the appearance of a recovered active material in Example 49, where FIG. 53 (a) illustrates an electrode before a processing step, FIG. 53 (b) illustrates the electrode after the processing step and before a stripping step, and FIG. 53 (c) illustrates the electrode after the stripping step.
[FIG. 54] FIG. 54 includes images illustrating the appearance of a recovered active material in Example 50, where FIG. 54 (a) illustrates an electrode before a processing step, FIG. 54 (b) illustrates the electrode after the processing step and before a stripping step, and FIG. 54 (c) illustrates the electrode after the stripping step.

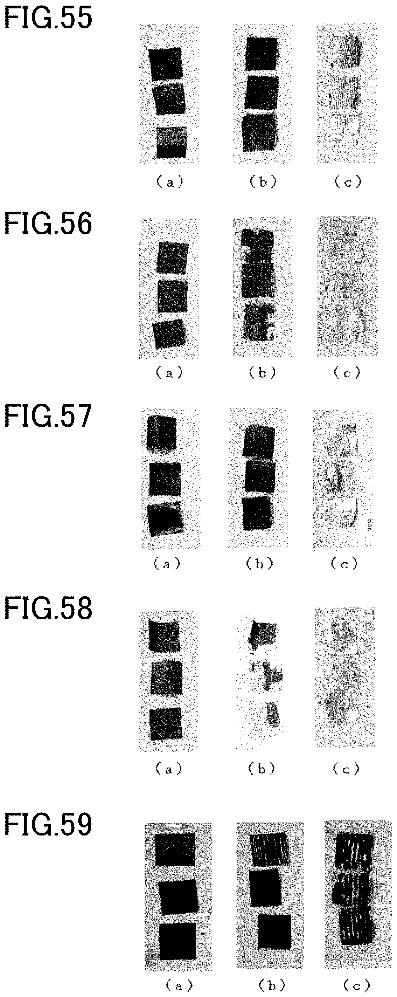

[FIG. 55] FIG. 55 includes images illustrating the appearance of a recovered active material in Example 51, where FIG. 55 (a) illustrates an electrode before a processing step, FIG. 55 (b) illustrates the electrode after the processing step and before a stripping step, and FIG. 55 (c) illustrates the electrode after the stripping step.
[FIG. 56] FIG. 56 includes images illustrating the appearance of a recovered active material in Example 52, where FIG. 56 (a) illustrates an electrode before a processing step, FIG. 56 (b) illustrates the electrode after the processing step and before a stripping step, and FIG. 56 (c) illustrates the electrode after the stripping step.
[FIG. 57] FIG. 57 includes images illustrating the appearance of a recovered active material in Example 53, where FIG. 57 (a) illustrates an electrode before a processing step, FIG. 57 (b) illustrates the electrode after the processing step and before a stripping step, and FIG. 57 (c) illustrates the electrode after the stripping step.
[FIG. 58] FIG. 58 includes images illustrating the appearance of a recovered active material in Example 54, where FIG. 58 (a) illustrates an electrode before a processing step, FIG. 58 (b) illustrates the electrode after the processing step and before a stripping step, and FIG. 58 (c) illustrates the electrode after the stripping step.
[FIG. 59] FIG. 59 includes images illustrating the appearance of a recovered active material in Example 55, where FIG. 59 (a) illustrates an electrode before a processing step, FIG. 59 (b) illustrates the electrode after the processing step and before a stripping step, and FIG. 59 (c) illustrates the electrode after the stripping step.

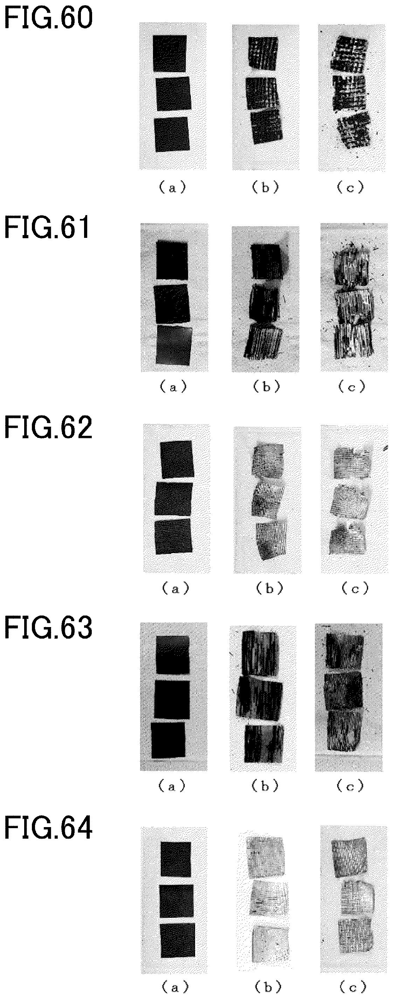

[FIG. 60] FIG. 60 includes images illustrating the appearance of a recovered active material in Example 56, where FIG. 60 (a) illustrates an electrode before a processing step, FIG. 60 (b) illustrates the electrode after the processing step and before a stripping step, and FIG. 60 (c) illustrates the electrode after the stripping step.
[FIG. 61] FIG. 61 includes images illustrating the appearance of a recovered active material in Example 57, where FIG. 61 (a) illustrates an electrode before a processing step, FIG. 61 (b) illustrates the electrode after the processing step and before a stripping step, and FIG. 61 (c) illustrates the electrode after the stripping step.
[FIG. 62] FIG. 62 includes images illustrating the appearance of a recovered active material in Example 58, where FIG. 62 (a) illustrates an electrode before a processing step, FIG. 62 (b) illustrates the electrode after the processing step and before a stripping step, and FIG. 62 (c) illustrates the electrode after the stripping step.
[FIG. 63] FIG. 63 includes images illustrating the appearance of a recovered active material in Example 59, where FIG. 63 (a) illustrates an electrode before a processing step, FIG. 63 (b) illustrates the electrode after the processing step and before a stripping step, and FIG. 63 (c) illustrates the electrode after the stripping step.
[FIG. 64] FIG. 64 includes images illustrating the appearance of a recovered active material in Example 60, where FIG. 64 (a) illustrates an electrode before a processing step, FIG. 64 (b) illustrates the electrode after the processing step and before a stripping step, and FIG. 64 (c) illustrates the electrode after the stripping step.

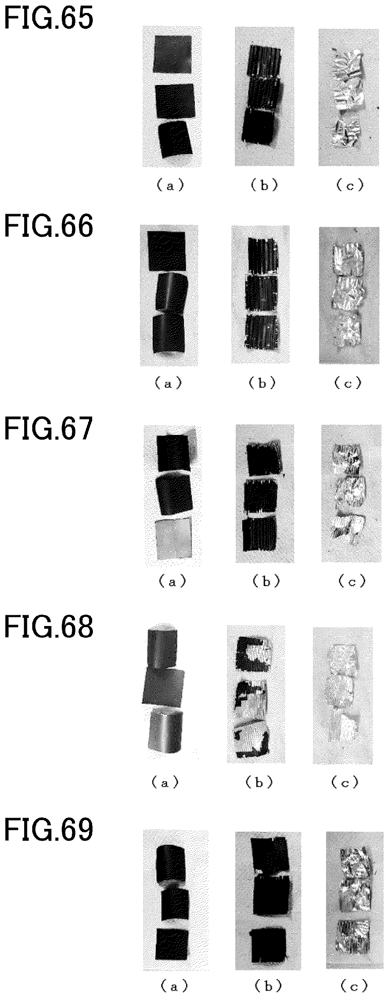

[FIG. 65] FIG. 65 includes images illustrating the appearance of a recovered active material in Example 61, where FIG. 65 (a) illustrates an electrode before a processing step, FIG. 65 (b) illustrates the electrode after the processing step and before a stripping step, and FIG. 65 (c) illustrates the electrode after the stripping step.
[FIG. 66] FIG. 66 includes images illustrating the appearance of a recovered active material in Example 62, where FIG. 66 (a) illustrates an electrode before a processing step, FIG. 66 (b) illustrates the electrode after the processing step and before a stripping step, and FIG. 66 (c) illustrates the electrode after the stripping step.
[FIG. 67] FIG. 67 includes images illustrating the appearance of a recovered active material in Example 63, where FIG. 67 (a) illustrates an electrode before a processing step, FIG. 67 (b) illustrates the electrode after the processing step and before a stripping step, and FIG. 67 (c) illustrates the electrode after the stripping step.
[FIG. 68] FIG. 68 includes images illustrating the appearance of a recovered active material in Example 64, where FIG. 68 (a) illustrates an electrode before a processing step, FIG. 68 (b) illustrates the electrode after the processing step and before a stripping step, and FIG. 68 (c) illustrates the electrode after the stripping step.
[FIG. 69] FIG. 69 includes images illustrating the appearance of a recovered active material in Example 65, where FIG. 69 (a) illustrates an electrode before a processing step, FIG. 69 (b) illustrates the electrode after the processing step and before a stripping step, and FIG. 69 (c) illustrates the electrode after the stripping step.

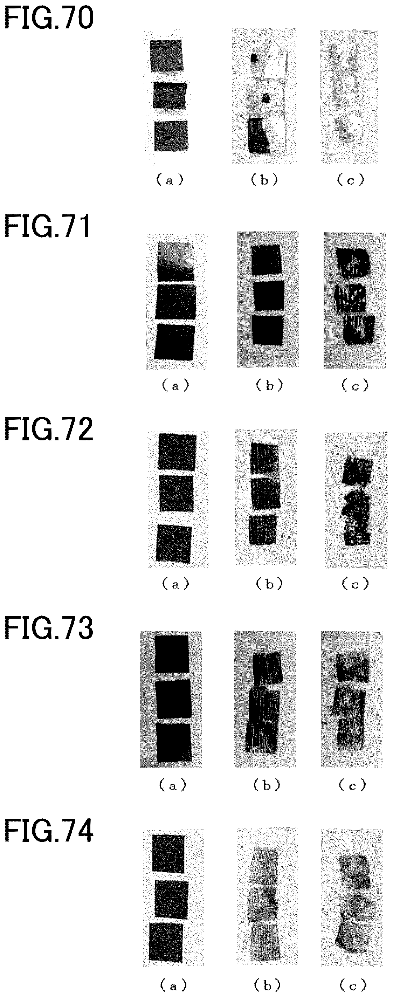

[FIG. 70] FIG. 70 includes images illustrating the appearance of a recovered active material in Example 66, where FIG. 70 (a) illustrates an electrode before a processing step, FIG. 70 (b) illustrates the electrode after the processing step and before a stripping step, and FIG. 70 (c) illustrates the electrode after the stripping step.
[FIG. 71] FIG. 71 includes images illustrating the appearance of a recovered active material in Example 67, where FIG. 71 (a) illustrates an electrode before a processing step, FIG. 71 (b) illustrates the electrode after the processing step and before a stripping step, and FIG. 71 (c) illustrates the electrode after the stripping step.
[FIG. 72] FIG. 72 includes images illustrating the appearance of a recovered active material in Example 68, where FIG. 72 (a) illustrates an electrode before a processing step, FIG. 72 (b) illustrates the electrode after the processing step and before a stripping step, and FIG. 72 (c) illustrates the electrode after the stripping step.
[FIG. 73] FIG. 73 includes images illustrating the appearance of a recovered active material in Example 69, where FIG. 73 (a) illustrates an electrode before a processing step, FIG. 73 (b) illustrates the electrode after the processing step and before a stripping step, and FIG. 73 (c) illustrates the electrode after the stripping step.
[FIG. 74] FIG. 74 includes images illustrating the appearance of a recovered active material in Example 70, where FIG. 74 (a) illustrates an electrode before a processing step, FIG. 74 (b) illustrates the electrode after the processing step and before a stripping step, and FIG. 74 (c) illustrates the electrode after the stripping step.

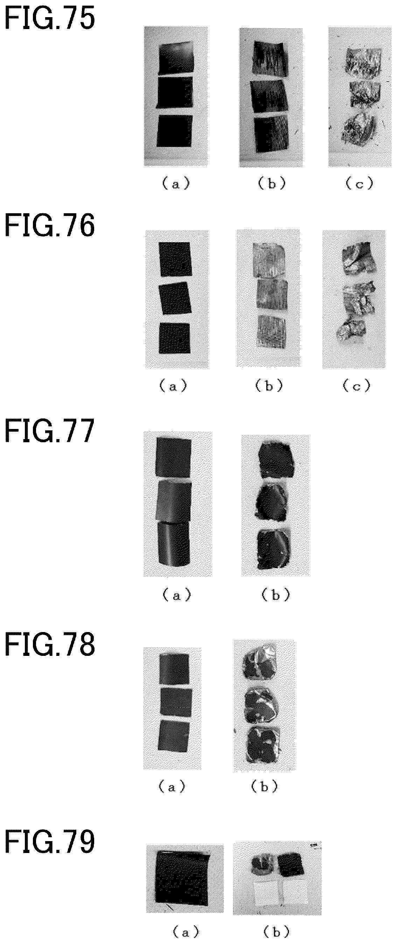

[FIG. 75] FIG. 75 includes images illustrating the appearance of a recovered active material in Example 71, where FIG. 75 (a) illustrates an electrode before a processing step, FIG. 75 (b) illustrates the electrode after the processing step and before a stripping step, and FIG. 75 (c) illustrates the electrode after the stripping step.
[FIG. 76] FIG. 76 includes images illustrating the appearance of a recovered active material in Example 72, where FIG. 76 (a) illustrates an electrode before a processing step, FIG. 76 (b) illustrates the electrode after the processing step and before a stripping step, and FIG. 76 (c) illustrates the electrode after the stripping step.
[FIG. 77] FIG. 77 includes images illustrating the appearance of a recovered active material in Comparative Example 1, where FIG. 77 (a) illustrates an electrode without a processing step, and FIG. 77 (b) illustrates the electrode after a stripping step without the processing step.
[FIG. 78] FIG. 78 includes images illustrating the appearance of a recovered active material in Comparative Example 2, where FIG. 78 (a) illustrates an electrode without a processing step, and FIG. 78 (b) illustrates the electrode after a stripping step without the processing step.
[FIG. 79] FIG. 79 includes images illustrating the appearance of a recovered active material in Comparative Example 3, where FIG. 79 (a) illustrates an electrode without a processing step, and FIG. 79 (b) illustrates the electrode after a stripping step without the processing step.

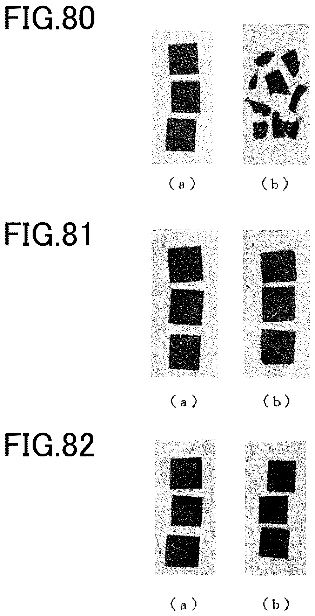

[FIG. 80] FIG. 80 includes images illustrating the appearance of a recovered active material in Comparative Example 4, where FIG. 80 (a) illustrates an electrode without a processing step, and FIG. 80 (b) illustrates the electrode after a stripping step without the processing step.
[FIG. 81] FIG. 81 includes images illustrating the appearance of a recovered active material in Comparative Example 5, where FIG. 81 (a) illustrates an electrode without a processing step, and FIG. 81 (b) illustrates the electrode after a stripping step without the processing step.
[FIG. 82] FIG. 82 includes images illustrating the appearance of a recovered active material in Comparative Example 6, where FIG. 82 (a) illustrates an electrode without a processing step, and FIG. 82 (b) illustrates the electrode after a stripping step without the processing step.

### DETAILED DESCRIPTION OF THE INVENTION

### (Method for Recovering Active Material from Power Storage Device)

A method for recovering an active material from a power storage device of the present invention includes a processing step, preferably includes a stripping step and a drying step, and further includes other steps as necessary.

A method for recovering a valuable material of the present invention is based on the present inventors' knowledge that the related art cannot efficiently recover an active material, because electrodes deform every time they collide in an airflow treatment of the electrodes.

Therefore, the present inventors have found that applying an external stimulus to electrodes that have been processed into a shape that would not deform (for example, a corrugated shape) enables stripping of active materials adhering to the central portions of the electrodes, because applying the external stimulus would not deform (curl) the electrodes, leading to a high active material recovery rate. Moreover, because the electrodes can be inhibited from becoming minute, the contamination of impurities in the active materials to be recovered can be reduced (active materials with high purity can be recovered).

The method for recovering an active material from a power storage device according to the present invention is a method for recovering an active material from a power storage device, which includes a processing step, preferably includes a stripping step, and further includes other steps as necessary.

Since the method for recovering an active material from a power storage device according to the present invention is a non-roasting process in which the power storage device from which materials are to be recovered is discharged and disassembled, there are advantages that fuel and electricity for roasting are not required, and that generation of carbon dioxide that may occur due to thermally decomposing organic electrolytic solutions, plastics, and the like is omitted, to reduce effects on the environment. In addition, the present invention has the advantage of being rich in the variety of the materials to be recovered with excellent quality and purity, compared with a melting process in which the power storage device from which materials are to be recovered is melted, or a roasting process in which the power storage device is roasted and crushed, because the materials constituting the power storage device can be inhibited from oxidation or deterioration by heat.

In the existing method of recovering an active material using a non-roasting process, there is a problem that, during the stripping step in which the active material is stripped from the electrode of a power storage device contained in a container by an airflow, the electrode is deformed when the electrode collides with the wall surface of the container, and the recovery rate of the active material is reduced. In addition, there is a problem that aluminum and copper, which are current collectors stripped off by the collision, are mixed into the recovered active material, and the purity of the active material is reduced.

The present invention has a processing step in which the electrode of the power storage device is processed into a corrugated shape before the stripping step, so that, in the subsequent stripping step, the electrode is hardly deformed even if an external stimulus is applied to the electrode, and a high recovery rate and purity of the active material can be realized.

### <Processing step>

The processing step is a step of processing at least a part of the electrode in the power storage device including the electrode to which the active material adheres, into a corrugated shape. By performing the processing step, even if an external stimulus is applied to the electrode in the stripping step described later, the impulse applied to the electrode is not concentrated locally and is distributed throughout the entire electrode, so that the electrode is not deformed and the active material can be stripped off from the electrode with high efficiency. Since edges of the electrode are less likely to be chipped away, contamination of fragments of the electrode is inhibited, and the active material with high purity can be recovered.

The number of times to perform the processing step may be a plurality of times.

By performing the processing step, it is possible to make it easy to strip a metal foil and the positive electrode material from each other and to strip the active material from the electrode and recover the active material with high efficiency, even if the power storage device has a strong adhesion between the metal foil and the positive electrode material.

At least the part of the electrode is not particularly limited, and can be suitably selected according to the purpose, and examples of the part include the entirety of the electrode or only an end of the electrode. Of these, the entirety of the electrode is preferable from the viewpoint that deformation of the electrode in the stripping step can be inhibited. Examples of the entirety of the electrode include: only one direction; one direction and a direction different from the one direction. Of these, one direction of the entirety and a direction different from the one direction are preferable.

In the case where the electrode has a corrugated shape in one direction of the entirety thereof and in a direction different from the one direction, the angle between the one direction and the direction different from the one direction is not particularly limited and can be appropriately selected according to the purpose, yet is preferably 30 degrees or more, and more preferably 90 degrees (orthogonal direction).

In a case of performing the processing step a plurality of times, in the second and subsequent processing steps, the processing can be performed at an angle of 45 degrees with respect to the one direction in the first processing step. Further, in the third and subsequent processing steps, the processing can be performed at an angle of 135 degrees.

The curvature radius of the corrugated shape is not particularly limited and can be appropriately selected according to the purpose, yet is preferably 0 mm or greater and 5 mm or less, more preferably 0.1 mm or greater and 2 mm or less, and particularly preferably 0.1 mm or greater and 0.5 mm or less. When the curvature radius is 0.1 mm or greater, bending and breaking of the electrode can be prevented, and when the curvature radius is 2 mm or less, deformation of the electrode due to external stimulation can be inhibited, and the electrode can be prevented from becoming minute. When the curvature radius is 1 mm or less, local occurrence of stripping of the electrode and the active material that are the constituents of the electrode improves the stripping efficiency, leading to shortening of the time for applying external stimulation, and a high energy efficiency.

With a smaller curvature radius, the processing into the corrugated shape causes the surface of the electrode and the active material (minute particle layer) to be stripped from each other in smaller units, resulting in a higher active material stripping/recovery efficiency. The smaller the curvature radius, the higher the purity of the recovered active material.

In particular, when the curvature radius is 0.1 mm or greater and 0.5 mm or less, it is possible for the active material to be stripped off from the electrode with high efficiency without performing the stripping step.

Further, in a case of performing the processing step a plurality of times, the curvature radius does not need to be changed or may be changed. In this way, the active material can be better stripped off.

The curvature radius of the corrugated shape can be measured, for example, by a non-contact measuring method, a stylus measuring method, or the like. An example of the equipment used in the non-contact measuring method is NH-3Ps (Mitaka Kohki Co., Ltd.). As a method other than the above, there is a method of capturing and recording a close-up view of a cross-section of the electrode and approximately calculating the curvature from the recorded image of the cross-sectional shape.

The processing method in the processing step is not particularly limited as long as the electrode can be processed into a corrugated shape, and can be suitably selected according to the purpose. Examples of the method include a processing method using a dedicated instrument, a method of sandwiching and pressing the electrode between corrugated plate materials, or the like. Among these, a processing method using an apparatus for processing a flat substrate into a corrugated shape is preferable from the viewpoint that the electrode can be partly processed and the operation is simple.

The dedicated instrument is not particularly limited, and can be appropriately selected according to the purpose. For example, a gear shape (e.g., GSWD18, Green Stuff World Corrugated Plate Straight Manufacturer, a tool for miniatures), or a rack shape can be used.

As the dedicated instrument, a commercial product may be used, or an instrument produced by a 3D printer may be used. The 3D printer is not particularly limited, and can be appropriately selected according to the purpose. For example, Photon Mono SE (available from ANYCUBIC) can be used.

### <<Active Material>>

The active material means a material that can suffice as a transaction object instead of being disposed of. Examples of the active material include carbon (C), cobalt, nickel, manganese, lithium, titanium, iron, phosphorus, sulfur, fluorine, and the like.

### -Power storage device-

The power storage device is not particularly limited, and can be suitably selected according to the purpose, and examples of the power storage device include a lithium-ion secondary battery, a lithium-ion capacitor, a solid-state battery, an all polymer battery, and the like.

The power storage device is, for example, a secondary battery to be charged and discharged by the migration of lithium ions between a positive electrode and a negative electrode, and an example of the power storage device includes one that has a positive electrode, a negative electrode, a separator, an electrolytic solution containing an electrolyte and an organic solvent, and an outer container (generally made of aluminum or iron) that is a battery case for containing the positive electrode, the negative electrode, the separator, and the electrolytic solution. A lithium-ion secondary battery that is a target of the present invention may be in a state in which the positive electrode, the negative electrode, and the separator are lost.

The power storage device may be a stacked type in which the positive electrode, the negative electrode, and the separator are stacked, or may be a wound type in which the stacked power storage device is wound.

The positive electrode, the negative electrode, and the separator may be alternately stacked.

The shape, structure, size, and the like of the power storage device from which the active material is recovered according to the present invention are not particularly limited. The shape of the power storage device may be, for example, a laminated type, a cylindrical type, a button type, a coin type, a square type, a flat type, or the like.

The form of the power storage device is not particularly limited, and may be suitably selected according to the purpose. Examples of the form include a battery cell, a battery module, and a battery pack. Here, a battery module represents a product including a plurality of battery cells, which are unit cells, in one housing in a connected state. A battery pack represents a product including a plurality of battery modules in one housing. A battery pack may be equipped with, for example, a controller or a cooling device.

### --Positive Electrode--

The positive electrode has a structure having a positive electrode material and an active material layer on a positive electrode current collector, and the shape thereof may be, for example, a flat plate shape.

The thickness of the positive electrode current collector is not particularly limited, may be suitably selected according to the purpose thereof, and may be, for example, 50 um or greater and 100 um or less.

The thickness of the active material layer is not particularly limited, may be suitably selected according to the purpose thereof, and may be, for example, 100 um or greater and 150 um or less.

The method for recovering an active material from a power storage device of the present invention can recover the active material with high efficiency even from a battery in which the thickness of the positive electrode current collector and the thickness of the active material layer are not as described above.

The positive electrode current collector is not particularly limited in its shape, structure, size, and the like. The structure of the positive electrode current collector may be, for example, a multilayer structure (laminate). The shape of the positive electrode current collector may be, for example, a foil shape. The material of the positive electrode current collector may be, for example, stainless steel, nickel, aluminum, copper, titanium, tantalum, and the like. Among these materials, aluminum is preferable. Aluminum is widely used because aluminum is not doped with lithium ions, and because of cost, conductivity, and the like. An aluminum alloy in which other metals (silicon, manganese, and the like) are added to aluminum is also used in order to impart desired characteristics. As described, the lithium-ion secondary battery, which may be the target from which a valuable material is to be recovered in the present invention contains aluminum as a positive electrode current collector.

The positive electrode material contains, for example, at least a positive electrode active material containing a rare valuable material and, if necessary, a conductive agent and a binder resin. The rare valuable material is not particularly limited, but as a target to be recovered by the method for recovering a valuable material of the present invention, is preferably either or both of cobalt and nickel because they are expensive.

Examples of the positive electrode active material include lithium manganate (LiMn₂O₄), which is referred to as an LMO-based material; lithium cobaltate (LiCoO₂), which is referred to as an LCO-based material; LiNiₓCo_{y}Mn_{z}O₂ (where x+y+z=1), which is referred to as a ternary or NCM-based material; LiNiₓCo_{y}Al_{z} (where x+y+z=1), which is referred to as an NCA-based material; lithium iron phosphate (LiFePO₄); lithium cobalt nickelate (LiCo_{1/2}Ni_{1/2}O₂); lithium titanate (Li₂TiO₃), and the like. These materials may be used in combination as the positive electrode active material.

Examples of the conductive agent include carbon black, graphite, carbon fiber, metal carbide, and the like.

Examples of the binder resin include homopolymers or copolymers of vinylidene fluoride, tetrafluoroethylene, acrylonitrile, ethylene oxide, and the like, and styrenebutadiene rubber.

### --Negative electrode--

The negative electrode has a structure having a negative electrode material and an active material layer on a negative electrode current collector. The shape of the negative electrode is, for example, a flat plate.

The thickness of the negative electrode current collector is not particularly limited, can be appropriately selected according to the purpose, and is, for example, 50 um or greater and 100 um or less.

The thickness of the active material layer is not particularly limited, can be appropriately selected according to the purpose, and is, for example, 100 um or greater and 150 um or less.

The method for recovering an active material from a power storage device of the present invention can recover the active material with high efficiency even from a battery in which the thickness of the negative electrode current collector and the thickness of the active material layer are not as described above.

The structure and size of the negative electrode current collector are not particularly limited. Copper is widely used as a material of the negative electrode current collector because copper is not doped with lithium ions, and because of cost and conductivity. Copper alloys in which other metals are added to copper are also used in order to impart desired characteristics. Foil-shaped negative electrode current collectors are widely used. As described, for example, a lithium-ion secondary battery that is the target from which a valuable material is recovered in the present invention contains a copper foil as the negative electrode current collector. When the copper foil is made of a copper alloy, the copper alloy will be obtained as a lightweight product in a wet sorting step described later. In some cases, it is necessary to further separate the alloy into copper and other metal components, and the like. Therefore, a lithium-ion secondary battery including a copper foil made of copper as a negative electrode current collector is suitable as a target from which valuable materials are recovered in the present invention. The term "copper foil" as used herein includes a foil made of a copper alloy (Cu≥70%). The thickness of the foil is preferably from 1 um to 100 µm.

The negative electrode material includes, for example, at least a negative electrode active material and, if necessary, a conductive agent and a binder resin. As the negative electrode active material, carbon materials such as graphite and hard carbon, titanate, silicon, and complex materials of these are widely used in view of capacity and cost. The lithium-ion secondary battery from which materials are recovered by the present invention preferably includes carbon as the negative electrode active material among these materials.

The positive electrode current collector and the negative electrode current collector generally have a laminated structure.

### --Electrolyte--

The electrolyte is not particularly limited, and can be suitably selected according to the purpose. Examples of the electrolyte include a nonaqueous electrolytic solution and a solid electrolyte.

### ---Nonaqueous electrolytic solution---

An example of the nonaqueous electrolytic solution is, for example, a nonaqueous electrolytic solution containing a lithium salt and an organic solvent.

The lithium salt is not particularly limited, and can be suitably selected according to the purpose. Examples of the lithium salt include lithium hexafluorophosphate, lithium tetrafluoroborate, lithium perchlorate, lithium bis(pentafluoroethanesulfone)imide, lithium bis (trifluoromethanesulfone)imide, and the like. One of these may be used alone, or two or more of these may be used in combination.

The organic solvent is not particularly limited, and can be suitably selected according to the purpose. Examples of the organic solvent include ethylene carbonate, dimethyl carbonate, propylene carbonate, diethyl carbonate, ethyl methyl carbonate, and the like. One of these may be used alone, or two or more of these may be used in combination.

Among these, a mixed solvent of ethylene carbonate and dimethyl carbonate is preferable in view of the high dissolvability for the lithium salt.

### ---Solid Electrolyte---

The solid electrolyte is not particularly limited, as long as it is a solid electrolyte having the conductivity of lithium ions, which are carriers that are responsible for battery reactions, and can be suitably selected according to the purpose. Examples of the solid electrolyte include an oxide-based solid electrolyte, a sulfide-based solid electrolyte, and the like.

Examples of the oxide-based solid electrolyte include a perovskite-type oxide, a NASICON-type oxide, a LISICON-type oxide, a garnet-type oxide, and the like.

Examples of the sulfide-based solid electrolyte include Li₂S-P₂S₅, Li₂S-SiS₂, Li₇P₃S₁₁, Li₂S-SiS₂-Li₃PO₄, and the like.

The material of the outer container (housing) of the lithium-ion secondary battery is not particularly limited, and examples include aluminum, iron, stainless steel, resin (plastic), and the like.

### <Stripping step>

The stripping step is to strip the active material from the electrode by applying an external stimulus to the electrode. The stripping step is performed after the processing step.

### <<External stimulus>>

The external stimulus is not particularly limited and can be suitably selected according to the purpose. Examples of the external stimulus include an airflow, a water flow, a shock wave, and the like. Among these, an airflow is preferable because water is not used in the stripping step.

The wind velocity of the airflow is not particularly limited and can be suitably selected according to the purpose, yet is preferably 5 m/s or higher and 100 m/s or lower. When the wind velocity is 5 m/s or higher, the active material can be efficiently stripped off. When the wind velocity is 100 m/s or lower, edges of the electrode can be prevented from being chipped away, and the active material of high purity can be recovered with reduced contamination by fragments of the electrode. The wind velocity means an average wind velocity.

The time of the stripping step by the airflow is not particularly limited and can be suitably selected according to the purpose, yet is, for example, preferably 0.5 minutes or longer and 2.0 minutes or longer. When the time is 0.5 minutes or longer, the active material can be efficiently stripped off. When the time is 2.0 minutes or shorter, edges of the electrodes can be prevented from being chipped away, and the active material of high purity can be recovered with reduced contamination by fragments of the electrode.

FIG. 2 is a schematic diagram illustrating an example of the method for recovering an active material from a power storage device of the present invention in a case of using an airflow as an external stimulus.

In the method for recovering an active material from a power storage device of the present invention in a case of using an airflow, an electrode 4 is placed in a container 2 having a mesh 3 on its upper part, and an airflow as an external stimulus is applied to the electrode 4. The airflow is generated from an airflow nozzle 1 in the direction of an arrow. By scanning the airflow nozzle 1, it is possible to change the direction of an airflow 5.

The direction of the airflow 5 is not particularly limited as long as the external stimulus can be applied to the electrode 4, and can be suitably selected according to the purpose.

The flow velocity of the water flow is not particularly limited, and can be suitably selected according to the purpose, yet is preferably 0.05 m/s or higher and 10 m/s or lower, and more preferably 1 m/s or higher and 5 m/s or lower. When the wind velocity is 5 cm/s or higher, the active material can be efficiently stripped off. When the wind velocity is 100 cm/s or lower, edges of the electrode can be prevented from being chipped away, and the active material of high purity can be recovered with reduced contamination by fragments of the electrode. The flow velocity means an average flow velocity.

The time of the stripping step by the water flow is not particularly limited, and can be suitably selected according to the purpose, yet is, for example, preferably 0.1 minutes or longer and 5.0 minutes or less. When the time is 0.1 minutes or less, the active material can be efficiently stripped off. When the time is 5.0 minutes or less, edges of the electrode can be prevented from being chipped away, and the active material of high purity can be recovered with reduced contamination by fragments of the electrode.

FIG. 3 is a schematic diagram illustrating an example of the method for recovering an active material from a power storage device according to the present invention in a case of using a water flow as an external stimulus.

In the method for recovering an active material from a power storage device according to the present invention in a case of using a water flow, an electrode 4 is placed in water 7 in a container 2, and a water flow as an external stimulus is applied to the electrode 4. The water flow is generated by a stirrer 6 of which the stirring part is put into water 4. It is possible to generate a water flow 7 by rotating the stirring part of the stirrer 6.

The direction of the water flow 7 is not particularly limited as long as an external stimulus can be applied to the electrode 4, and can be appropriately selected according to the purpose.

An applied voltage of the shock wave is not particularly limited, and can be appropriately selected according to the purpose, yet is preferably 10 kV or higher and 200 kV or lower.

The distance from a paired electrode of an electric pulse device when applying the shock wave is not particularly limited, and can be appropriately selected according to the purpose, yet is, for example, preferably 0.5 cm or longer and 30 cm or less.

The number of times of pulsing when applying the shock wave is not particularly limited, and can be appropriately selected according to the purpose, yet is, for example, preferably 1 time or more and 100 times or less.

FIG. 4 is a schematic diagram illustrating an example of the method for recovering an active material from a power storage device of the present invention in a case of using a shock wave as an external stimulus.
In the method for recovering an active material from a power storage device of the present invention in a case of using a shock wave, an electrode 4 is placed in water 7 in a container 2, and a shock wave as an external stimulus is applied to the electrode 4. A shock wave 12 is generated by a dielectric breakdown generating paired electrode 10 of a high-voltage electric pulse generator 9 connected to a power source device 11, when the dielectric breakdown generating paired electrode 10 is put in water 4.

The temperature in the stripping step is not particularly limited, and can be suitably selected according to the purpose, yet is preferably from 0°C higher to 200°C or lower. The active material is more easily stripped from the electrode that is dry.

### <Drying Step>

The drying step is a step of drying the electrode by applying heat to the electrode. The drying step is preferably performed before the stripping step.

By performing the drying step, it is possible to reduce scattering of the organic solvent contained in the power storage device, and to better strip the active material from the electrode.

The drying condition in the drying step is not particularly limited and can be suitably selected according to the purpose. Examples of the drying condition include drying at 50°C or higher for 15 minutes or more.

### <Other Steps>

The other steps are not particularly limited and can be suitably selected according to the purpose. Examples of the other steps include a discharge step and a cutting step.

The discharge step is not particularly limited and can be suitably selected according to the purpose. For example, by performing discharging at a fixed resistance of 2 Q for 6 hours or more, it is possible to complete the discharging by maintaining a voltage of 0.1 V or lower for 2 hours or more.

In many cases, electrical energy remains in a power storage device that is brought to material recycling. The more electrical energy remains, the greater the possibility of heating, ignition, or the like of the battery during the work. Therefore, by performing the discharging step, it is possible to reduce the risk of heating, ignition, or the like of the battery during the work. For example, it is possible to safely disassemble a single cell of a 3.7 V power storage device when discharged to 0.3 V or lower, and to more safely disassemble it when discharged to 0.1 V or lower.

In a battery pack composed of a plurality of cells, the discharged states of the cells may not be uniform. Therefore, it is preferable to measure the voltage of each cell constituting the pack, or to discharge the cells to a voltage at which the safety factor is set.

### Examples

The present invention will be described below by way of Examples, but the present invention is not limited to these Examples.

### (Example 1)

### <Discharging Step>

A vehicle-mountable lithium-ion battery A (Prius PHV, having a 3 hour rate of 21.5 Ah, a positive electrode current collector thickness of 100 µm, a positive electrode active material layer thickness of 100 µm, a negative electrode current collector thickness of 100 um, and a negative electrode active material layer thickness of 100 µm) serving as a power storage device was discharged for 6 hours at a fixed resistance of 2 Q, and with a voltage of 0.1 V or lower maintained for 2 hours or more.

### <Cutting Step>

What was inside the lithium-ion battery A was taken out using an upper circular saw (K-210, Hozan Tool Industrial Co., Ltd.), and then the current collector part of the inside content was cut using a cutter, to obtain electrodes of 4 cm × 4 cm.

### <Processing Step>

Of the obtained electrodes, the positive electrode (4 cm × 4 cm) was processed using a processing jig so that the entirety of the electrode became a corrugated shape having a curvature radius of 2 mm. Then, the active material in the above-described container after the processing step was recovered. FIG. 5 includes images illustrating the appearance of the recovered active material. FIG. 5 (a) illustrates the electrode before the processing step, and FIG. 5 (b) illustrates the electrode after the processing step.

### (Example 2-A)

Active material recovery was performed in the same manner as in Example 1, except that unlike Example 1, the processing was changed to be performed in one direction and its orthogonal direction. FIG. 6A includes images illustrating the appearance of the recovered active material. FIG. 6A (a) is the electrode before the processing step, and FIG. 6A (b) is an electrode after the processing step.

### (Example 2-B)

Active material recovery was performed in the same manner as in Example 1, except that unlike in Example 1, the processing was changed to be performed in one direction and a direction at 45 degrees to the one direction. FIG. 6B includes images illustrating the appearance of the recovered active material. FIG. 6B (a) illustrates the electrode before the processing step, FIG. 6B (b) illustrates the electrode after the processing step in the one direction, and FIG. 6B (c) illustrates the electrode after the processing step further in the 45-degree direction.

### (Example 2-C)

Active material recovery was performed in the same manner as in Example 1, except that unlike in Example 1, the processing was changed to be performed in one direction, a direction at 45 degrees to the one direction, and a direction at 135 degrees to the one direction. FIG. 6C includes images illustrating the appearance of the recovered active material. FIG. 6C (a) illustrates the electrode before the processing step, FIG. 6C (b) illustrates the electrode after the processing step in the one direction, FIG. 6C (c) illustrates the electrode after the processing step further in the 45-degree direction, and FIG. 6C (d) illustrates the electrode after the processing step further in the 135-degree direction.

### (Example 3)

Active material recovery was performed in the same manner as in Example 1, except that unlike in Example 1, the curvature radius of the processed shape was changed to 1 mm. FIG. 7 includes images illustrating the appearance of the recovered active material. FIG. 7 (a) illustrates the electrode before the processing step, and FIG. 7 (b) illustrates the electrode after the processing step.

### (Example 4-A)

Active material recovery was performed in the same manner as in Example 3, except that unlike in Example 3, the processing was changed to be performed in one direction and its orthogonal direction. FIG. 8A includes images illustrating the appearance of the recovered active material. FIG. 8A (a) illustrates the electrode before the processing step, and FIG. 8A (b) illustrates the electrode after the processing step.

### (Example 4-B)

Active material recovery was performed in the same manner as in Example 3, except that unlike in Example 3, the processing was changed to be performed in one direction and a direction at 45 degrees to the one direction. FIG. 8B includes images illustrating the appearance of the recovered active material. FIG. 8B (a) illustrates the electrode before the processing step, FIG. 8B (b) illustrates the electrode after the processing step in the one direction, and FIG. 8B (c) illustrates the electrode after the processing step further in the 45-degree direction.

### (Example 4-C)

Active material recovery was performed in the same manner as in Example 3, except that unlike in Example 3, the processing was changed to be performed in one direction, a direction at 45 degrees to the one direction, and a direction at 135 degrees to the one direction. FIG. 8C includes images illustrating the appearance of the recovered active material. FIG. 8C (a) illustrates the electrode before the processing step, FIG. 8C (b) illustrates the electrode after the processing step in the one direction, FIG. 8C (c) illustrates the electrode after the processing step further in the 45-degree direction, and FIG. 8C (d) illustrates the electrode after the processing step further in the 135-degree direction.

### (Example 5)

Active material recovery was performed in the same manner as in Example 1, except that unlike in Example 1, the curvature radius of the processed shape was changed to 0.5 mm. FIG. 9 includes images illustrating the appearance of the recovered active material. FIG. 9 (a) illustrates the electrode before the processing step, and FIG. 9 (b) illustrates the electrode after the processing step.

### (Example 6-A)

Active material recovery was performed in the same manner as in Example 5, except that unlike in Example 5, the processing was changed to be performed in one direction and its orthogonal direction. FIG. 10A includes images illustrating the appearance of the recovered active material. FIG. 10A (a) illustrates the electrode before the processing step, and FIG. 10A (b) illustrates the electrode after the processing step.

### (Example 6-B)

Active material recovery was performed in the same manner as in Example 5, except that unlike in Example 5, the processing was changed to be performed in one direction and a direction at 45 degrees to the one direction. FIG. 10B includes images illustrating the appearance of the recovered active material. FIG. 10B (a) illustrates the electrode before the processing step, FIG. 10B (b) illustrates the electrode after the processing step in the one direction, and FIG. 10B (c) illustrates the electrode after the processing step further in the 45-degree direction.

### (Example 6-C)

Active material recovery was performed in the same manner as in Example 5, except that unlike in Example 5, the processing was changed to be performed in one direction, a direction at 45 degrees to the one direction, and a direction at 135 degrees to the one direction. FIG. 10C includes images illustrating the appearance of the recovered active material. FIG. 10C (a) illustrates the electrode before the processing step, FIG. 10C (b) illustrates the electrode after the processing step in the one direction, FIG. 10C (c) illustrates the electrode after the processing step further in the 45-degree direction, and FIG. 10C (d) illustrates the electrode after the processing step further in the 135-degree direction.

### (Example 7)

Active material recovery was performed in the same manner as in Example 1, except that unlike in Example 1, the target to be processed was changed to the negative electrode. FIG. 11 includes images illustrating the appearance of the recovered active material. FIG. 11 (a) illustrates the electrode before the processing step, and FIG. 11 (b) illustrates the electrode after the processing step.

### (Example 8)

Active material recovery was performed in the same manner as in Example 2, except that unlike in Example 2, the target to be processed was changed to the negative electrode. FIG. 12 includes images illustrating the appearance of the recovered active material. FIG. 12 (a) illustrates the electrode before the processing step, and FIG. 12 (b) illustrates the electrode after the processing step.

### (Example 9)

Active material recovery was performed in the same manner as in Example 3, except that unlike in Example 3, the target to be processed was changed to the negative electrode. FIG. 13 includes images illustrating the appearance of the recovered active material. FIG. 13 (a) illustrates the electrode before the processing step, and FIG. 13 (b) illustrates the electrode after the processing step.

### (Example 10)

Active material recovery was performed in the same manner as in Example 4, except that unlike in Example 4, the target to be processed was changed to the negative electrode. FIG. 14 includes images illustrating the appearance of the recovered active material. FIG. 14 (a) illustrates the electrode before the processing step, and FIG. 14 (b) illustrates the electrode after the processing step.

### (Example 11)

Active material recovery was performed in the same manner as in Example 5, except that unlike in Example 5, the target to be processed was changed to the negative electrode. FIG. 15 includes images illustrating the appearance of the recovered active material. FIG. 15 (a) illustrates the electrode before the processing step, and FIG. 15 (b) illustrates the electrode after the processing step.

### (Example 12)

Active material recovery was performed in the same manner as in Example 6, except that unlike in Example 6, the target to be processed was changed to the negative electrode. FIG. 16 includes images illustrating the appearance of the recovered active material. FIG. 16 (a) illustrates the electrode before the processing step, and FIG. 16 (b) illustrates the electrode after the processing step.

### (Example 13)

Active material recovery was performed in the same manner as in Example 1, except that unlike in Example 1, the target to be processed was changed to a laminate of the positive and negative electrodes. FIG. 17 includes images illustrating the appearance of the recovered active material. FIG. 17 (a) illustrates the electrodes before the processing step, and FIG. 17 (b) illustrates the electrodes after the processing step.

### (Example 14)

Active material recovery was performed in the same manner as in Example 2, except that unlike in Example 2, the target to be processed was changed to a laminate of the positive and negative electrodes. FIG. 18 includes images illustrating the appearance of the recovered active material. FIG. 18 (a) illustrates the electrodes before the processing step, and FIG. 18 (b) illustrates the electrodes after the processing step.

### (Example 15)

Active material recovery was performed in the same manner as in Example 3, except that unlike in Example 3, the target to be processed was changed to a laminate of the positive and negative electrodes. FIG. 19 includes images illustrating the appearance of the recovered active material. FIG. 19 (a) illustrates the electrodes before the processing step, and FIG. 19 (b) illustrates the electrodes after the processing step.

### (Example 16)

Active material recovery was performed in the same manner as in Example 4, except that unlike in Example 4, the target to be processed was changed to a laminate of the positive and negative electrodes. FIG. 20 includes images illustrating the appearance of the recovered active material. FIG. 20 (a) illustrates the electrodes before the processing step, and FIG. 20 (b) illustrates the electrodes after the processing step.

### (Example 17)

Active material recovery was performed in the same manner as in Example 5, except that unlike in Example 5, the target to be processed was changed to a laminate of the positive and negative electrodes. FIG. 21 includes images illustrating the appearance of the recovered active material. FIG. 21 (a) illustrates the electrodes before the processing step, and FIG. 21 (b) illustrates the electrodes after the processing step.

### (Example 18)

Active material recovery was performed in the same manner as In Example 6, except that unlike in Example 6, the target to be processed was changed to a laminate of the positive and negative electrodes. FIG. 22 includes images illustrating the appearance of the recovered active material. FIG. 22 (a) illustrates the electrodes before the processing step, and FIG. 22 (b) illustrates the electrodes after the processing step.

### (Example 19)

Active material recovery was performed in the same manner as in Example 1, except that unlike in Example 1, the battery was changed to a vehicle-mountable lithium-ion battery B (RAV4, having a 3 hour rate of 51 Ah, a positive electrode current collector thickness of 50 µm, a positive electrode active material layer thickness of 150 µm, a negative electrode current collector thickness of 50 um, and a negative electrode active material layer thickness of 150 µm). FIG. 23 includes images illustrating the appearance of the recovered active material. FIG. 23 (a) illustrates the electrode before the processing step, and FIG. 23 (b) illustrates the electrode after the processing step. The lithium-ion battery B was a power storage device in which the adhesion between the metal foil and the positive electrode material was stronger than that in the lithium-ion battery A.

### (Example 20-A)

Active material recovery was performed in the same manner as in Example 2, except that unlike in Example 2, the battery was changed to the vehicle-mountable lithium-ion battery B. FIG. 24A includes images illustrating the appearance of the recovered active material. FIG. 24A (a) illustrates the electrode before the processing step, and FIG. 24A (b) illustrates the electrode after the processing step.

### (Example 20-B)

Active material recovery was performed in the same manner as in Example 19, except that unlike in Example 19, the processing was changed to be performed in one direction and a direction at 45 degrees to the one direction. FIG. 24B includes images illustrating the appearance of the recovered active material. FIG. 24B (a) illustrates the electrode before the processing step, FIG. 24B (b) illustrates the electrode after the processing step in the one direction, and FIG. 24B (c) illustrates the electrode after the processing step further in the 45-degree direction.

### (Example 20-C)

Active material recovery was performed in the same manner as in Example 19, except that unlike in Example 19, the processing was changed to be performed in one direction, a direction at 45 degrees to the one direction, and a direction at 135 degrees to the one direction. FIG. 84 includes images illustrating the appearance of the recovered active material. FIG. 24C (a) is the electrode before the processing step, FIG. 24 C (b) is the electrode after the processing step in the one direction, FIG. 24C (c) is the electrode after the processing step further in the 45-degree direction, and FIG. 24C (d) is the electrode after the processing step further in the 135-degree direction.

### (Example 21)

Active material recovery was performed in the same manner as in Example 3, except that unlike in Example 3, the battery was changed to the vehicle-mountable lithium-ion battery B. FIG. 25 includes images illustrating the appearance of the recovered active material. FIG. 25 (a) illustrates the electrode before the processing step, and FIG. 25 (b) illustrates the electrode after the processing step.

### (Example 22-A)

Active material recovery was performed in the same manner as in Example 4, except that unlike in Example 4, the battery was changed to the vehicle-mountable lithium-ion battery B. FIG. 26A includes images illustrating the appearance of the recovered active material. FIG. 26A (a) illustrates the electrode before the processing step, and FIG. 26A (b) illustrates the electrode after the processing step.

### (Example 22-B)

Active material recovery was performed in the same manner as in Example 21, except that unlike in Example 21, the processing was changed to be performed in one direction and a direction at 45 degrees to the one direction. FIG. 26B includes images illustrating the appearance of the recovered active material. FIG. 26B (a) illustrates the electrode before the processing step, FIG. 26B (b) illustrates the electrode after the processing step in the one direction, and FIG. 26B (c) illustrates the electrode after the processing step further in the 45-degree direction.

### (Example 22-C)

Active material recovery was performed in the same manner as in Example 21, except that unlike in Example 21, the processing was changed to be performed in one direction, a direction at 45 degrees to the one direction, and a direction at 135 degrees to the one direction. FIG. 26C includes images illustrating the appearance of the recovered active material. FIG. 26C (a) illustrates the electrode before the processing step, FIG. 26C (b) illustrates the electrode after the processing step in the one direction, FIG. 26C (c) illustrates the electrode after the processing step further in the 45-degree direction, and FIG. 26C (d) illustrates the electrode after the processing step further in the 135-degree direction.

### (Example 23)

Active material recovery was performed in the same manner as in Example 5, except that unlike in Example 5, the battery was changed to the vehicle-mountable lithium-ion battery B. FIG. 27 includes images illustrating the appearance of he recovered active material. FIG. 27 (a) illustrates the electrode before the processing step, and FIG. 27 (b) illustrates the electrode after the processing step.

### (Example 24-A)

Active material recovery was performed in the same manner as in Example 6, except that unlike in Example 6, the battery was changed to the vehicle-mountable lithium-ion battery B. FIG. 28A includes images illustrating the appearance of the recovered active material. FIG. 28A (a) illustrates the electrode before the processing step, and FIG. 28A (b) illustrates the electrode after the processing step.

### (Example 24-B)

Active material recovery was performed in the same manner as in Example 23, except that unlike in Example 23, the processing was changed to be performed in one direction and a direction at 45 degrees to the one direction. FIG. 28B includes images illustrating the appearance of the recovered active material. FIG. 28B (a) illustrates the electrode before the processing step, FIG. 28B (b) illustrates the electrode after the processing step in the one direction, and FIG. 28B (c) illustrates the electrode after the processing step further in the 45-degree direction.

### (Example 24-C)

Active material recovery was performed in the same manner as in Example 23, except that unlike in Example 23, the processing was changed to be performed in one direction, a direction at 45 degrees to the one direction, and a direction at 135 degrees to the one direction. FIG. 28C includes images illustrating the appearance of the recovered active material. FIG. 28C (a) illustrates the electrode before the processing step, FIG. 28C (b) illustrates the electrode after the processing step in the one direction, FIG. 28C (c) illustrates the electrode after the processing step further in the 45-degree direction, and FIG. 28C (d) illustrates the electrode after the processing step further in the 135-degree direction.

### (Example 25)

### <Stripping Step>

In Example 1, following the processing step, the positive electrode, which was the electrode of the processed battery A, was placed in a container (made of stainless steel, 18 L), and a wire mesh was set on the upper part of the container. An airflow was sent from the upper part of the container as an external stimulus using a blower (GBL800E blower, BOSCH), to cause the electrode to float and collide in the container. Then, the active material in the container after the stripping step was recovered. FIG. 29 includes images illustrating the appearance of the recovered active material. FIG. 29 (a) illustrates the electrode before the processing step, FIG. 29 (b) illustrates the electrode after the processing step and before the stripping step, and FIG. 29 (c) illustrates the electrode after the stripping step.

Conditions set in the GBL800E blower, BOSCH, are indicated below.

### [Set conditions]

- Number of revolutions: from 0 to 16,000 min⁻¹ (revolutions/minute)
- Maximum air volume: 4.5 m³/min
- Maximum wind pressure: 7.2 kPa
- Average wind velocity: 43 m/s
- Time: 0.5 minutes

### (Example 26)

Active material recovery was performed in the same manner as in Example 25, except that unlike in Example 25, the processing was changed to be performed in one direction and its orthogonal direction. FIG. 30 includes images illustrating the appearance of the recovered active material. FIG. 30 (a) illustrates the electrode before the processing step, FIG. 30 (b) illustrates the electrode after the processing step and before the stripping step, and FIG. 30 (c) illustrates the electrode after the stripping step.

### (Example 27)

Active material recovery was performed in the same manner as in Example 25, except that unlike in Example 25, the curvature radius of the processed shape was changed to 1 mm. FIG. 31 includes images illustrating the appearance of the recovered active material. FIG. 31 (a) illustrates the electrode before the processing step, FIG. 31 (b) illustrates the electrode after the processing step and before the stripping step, and FIG. 31 (c) illustrates the electrode after the stripping step.

### (Example 28)

Active material recovery was performed in the same manner as in Example 27, except that unlike in Example 27, the processing was changed to be performed in one directional and its orthogonal directions. FIG. 32 includes images illustrating the appearance of the recovered active material. FIG. 32 (a) illustrates the electrode before the processing step, FIG. 32 (b) illustrates the electrode after the processing step and before the stripping step, and FIG. 32 (c) illustrates the electrode after the stripping step.

### (Example 29)

Active material recovery was performed in the same manner as in Example 25, except that unlike in Example 25, the curvature radius of the processed shape was changed to 0.5 mm. FIG. 33 includes images illustrating the appearance of the recovered active material. FIG. 33 (a) illustrates the electrode before the processing step, FIG. 33 (b) illustrates the electrode after the processing step and before the stripping step, and FIG. 33 (c) illustrates the electrode after the stripping step.

### (Example 30)

Active material recovery was performed in the same manner as in Example 29, except that unlike in Example 29, the processing was changed to be performed in one directional and its orthogonal directions. FIG. 34 includes images illustrating the appearance of the recovered active material. FIG. 34 (a) illustrates the electrode before the processing step, FIG. 34 (b) illustrates the electrode after the processing step and before the stripping step, and FIG. 34 (c) illustrates the electrode after the stripping step.

### (Example 31)

Active material recovery was performed in the same manner as in Example 25, except that unlike in Example 25, the electrode was changed to the negative electrode. FIG. 35 includes images illustrating the appearance of the recovered active material. FIG. 35 (a) illustrates the electrode before the processing step, FIG. 35 (b) illustrates the electrode after the processing step and before the stripping step, and FIG. 35 (c) illustrates the electrode after the stripping step.

### (Example 32)

Active material recovery was performed in the same manner as in Example 26, except that unlike in Example 26, the electrode was changed to the negative electrode. FIG. 36 includes images illustrating the appearance of the recovered active material. FIG. 36 (a) illustrates the electrode before the processing step, FIG. 36 (b) illustrates the electrode after the processing step and before the stripping step, and FIG. 36 (c) illustrates the electrode after the stripping step.

### (Example 33)

Active material recovery was performed in the same manner as in Example 27, except that unlike in Example 27, the electrode was changed to the negative electrode. FIG. 37 includes images illustrating the appearance of the recovered active material. FIG. 37 (a) illustrates the electrode before the processing step, FIG. 37 (b) illustrates the electrode after the processing step and before the stripping step, and FIG. 37 (c) illustrates the electrode after the stripping step.

### (Example 34)

Active material recovery was performed in the same manner as in Example 28, except that unlike in Example 28, the electrode was changed to the negative electrode. FIG. 38 includes images illustrating the appearance of the recovered active material. FIG. 38 (a) illustrates the electrode before the processing step, FIG. 38 (b) illustrates the electrode after the processing step and before the stripping step, and FIG. 38 (c) illustrates the electrode after the stripping step.

### (Example 35)

Active material recovery was performed in the same manner as in Example 29, except that unlike in Example 29, the electrode was changed to the negative electrode. FIG. 39 includes images illustrating the appearance of the recovered active material. FIG. 39 (a) illustrates the electrode before the processing step, FIG. 39 (b) illustrates the electrode after the processing step and before the stripping step, and FIG. 39 (c) illustrates the electrode after the stripping step.

### (Example 36)

Active material recovery was performed in the same manner as in Example 30, except that unlike in Example 30, the electrode was changed to the negative electrode. FIG. 40 includes images illustrating the appearance of the recovered active material. FIG. 40 (a) illustrates the electrode before the processing step, FIG. 40 (b) illustrates the electrode after the processing step and before the stripping step, and FIG. 40 (c) illustrates the electrode after the stripping step.

### (Example 37)

Active material recovery was performed in the same manner as in Example 25, except that unlike in Example 25, the electrode was changed to the positive and negative electrodes. FIG. 41 includes images illustrating the appearance of the recovered active material. FIG. 41 (a) illustrates the electrodes before the processing step, FIG. 41 (b) illustrates the electrodes after the processing step and before the stripping step, and FIG. 41 (c) illustrates the electrodes after the stripping step.

### (Example 38)

Active material recovery was performed in the same manner as in Example 26, except that unlike in Example 26, the electrode was changed to the positive and negative electrodes. FIG. 42 includes images illustrating the appearance of the recovered active material. FIG. 42 (a) illustrates the electrodes before the processing step, FIG. 42 (b) illustrates the electrodes after the processing step and before the stripping step, and FIG. 42 (c) illustrates the electrodes after the stripping step.

### (Example 39)

Active material recovery was performed in the same manner as in Example 27, except that unlike in Example 27, the electrode was changed to the positive and negative electrodes. FIG. 43 includes images illustrating the appearance of the recovered active material. FIG. 43 (a) illustrates the electrodes before the processing step, FIG. 43 (b) illustrates the electrodes after the processing step and before the stripping step, and FIG. 43 (c) illustrates the electrodes after the stripping step.

### (Example 40)

Active material recovery was performed in the same manner as in Example 28, except that unlike in Example 28, the electrode was changed to the positive and negative electrodes. FIG. 44 includes images illustrating the appearance of the recovered active material. FIG. 44 (a) illustrates the electrodes before the processing step, FIG. 44 (b) illustrates the electrodes after the processing step and before the stripping step, and FIG. 44 (c) illustrates the electrodes after the stripping step.

### (Example 41)

Active material recovery was performed in the same manner as in Example 29, except that unlike in Example 29, the electrode was changed to the positive and negative electrodes. FIG. 45 includes images illustrating the appearance of the recovered active material. FIG. 45 (a) illustrates the electrodes before the processing step, FIG. 45 (b) illustrates the electrodes after the processing step and before the stripping step, and FIG. 45 (c) illustrates the electrodes after the stripping step.

### (Example 42)

Active material recovery was performed in the same manner as in Example 30, except that unlike in Example 30, the electrode was changed to the positive and negative electrodes. FIG. 46 includes images illustrating the appearance of the recovered active material. FIG. 46 (a) illustrates the electrodes before the processing step, FIG. 46 (b) illustrates the electrodes after the processing step and before the stripping step, and FIG. 46 (c) illustrates the electrodes after the stripping step.

### (Example 43)

Active material recovery was performed in the same manner as in Example 25, except that unlike in Example 25, the battery was changed to the battery B. FIG. 47 includes images illustrating the appearance of the recovered active material. FIG. 47 (a) illustrates the electrode before the processing step, FIG. 47 (b) illustrates the electrode after the processing step and before the stripping step, and FIG. 47 (c) illustrates the electrode after the stripping step.

### (Example 44)

Active material recovery was performed in the same manner as in Example 26, except that unlike in Example 26, the battery was changed to the battery B. FIG. 48 includes images illustrating the appearance of the recovered active material. FIG. 48 (a) illustrates the electrode before the processing step, FIG. 48 (b) illustrates the electrode after the processing step and before the stripping step, and FIG. 48 (c) illustrates the electrode after the stripping step.

### (Example 45)

Active material recovery was performed in the same manner as in Example 27, except that unlike in Example 27, the battery was changed to the battery B. FIG. 49 includes images illustrating the appearance of the recovered active material. FIG. 49 (a) illustrates the electrode before the processing step, FIG. 49 (b) illustrates the electrode after the processing step and before the stripping step, and FIG. 49 (c) illustrates the electrode after the stripping step.

### (Example 46)

Active material recovery was performed in the same manner as in Example 28, except that unlike in Example 28, the battery was changed to the battery B. FIG. 50 includes images illustrating the appearance of the recovered active material. FIG. 50 (a) illustrates the electrode before the processing step, FIG. 50 (b) illustrates the electrode after the processing step and before the stripping step, and FIG. 50 (c) illustrates the electrode after the stripping step.

### (Example 47)

Active material recovery was performed in the same manner as in Example 29, except that unlike in Example 29, the battery was changed to the battery B. FIG. 51 includes images illustrating the appearance of the recovered active material. FIG. 51 (a) illustrates the electrode before the processing step, FIG. 51 (b) illustrates the electrode after the processing step and before the stripping step, and FIG. 51 (c) illustrates the electrode after the stripping step.

### (Example 48)

Active material recovery was performed in the same manner as in Example 30, except that unlike in Example 30, the battery was changed to the battery B. FIG. 52 includes images illustrating the appearance of the recovered active material. FIG. 52 (a) illustrates the electrode before the processing step, FIG. 52 (b) illustrates the electrode after the processing step and before the stripping step, and FIG. 52 (c) illustrates the electrode after the stripping step.

### (Example 49)

### <Stripping Step>

In Example 1, following the processing step, the positive electrode, which was the electrode of the battery A processed, was placed in a container (made of plastic, 5 L water), and a water flow was applied as an external stimulus from the upper part of the container using a stirrer (device name: Mazela ZZ-2321, obtained from Tokyo RikaKikai Co., Ltd.) to cause the electrode to float and collide in the container. Then, the active material in the container after the stripping step was recovered. FIG. 53 includes images illustrating the appearance of the recovered active material.

Conditions set in the stirrer are indicated below. FIG. 53 (a) illustrates the electrode before the processing step, FIG. 53 (b) illustrates the electrode after the processing step and before the stripping step, and FIG. 53 (c) illustrates the electrode after the stripping step.

### [Set conditions]

- Number of revolutions: 500 rpm
- Average flow velocity: 300 m/min (5 m/sec)
- Time: 1 min

### (Example 50)

Active material recovery was performed in the same manner as in Example 49, except that unlike in Example 49, the processing was changed to be performed in one direction and its orthogonal direction. FIG. 54 includes images illustrating the appearance of the recovered active material. FIG. 54 (a) illustrates the electrode before the processing step, FIG. 54 (b) illustrates the electrode after the processing step and before the stripping step, and FIG. 54 (c) illustrates the electrode after the stripping step.

### (Example 51)

Active material recovery was performed in the same manner as in Example 49, except that unlike in Example 49, the curvature radius of the processed shape was changed to 1 mm. FIG. 55 includes images illustrating the appearance of the recovered active material. FIG. 55 (a) illustrates the electrode before the processing step, FIG. 55 (b) illustrates the electrode after the processing step and before the stripping step, and FIG. 55 (c) illustrates the electrode after the stripping step.

### (Example 52)

Active material recovery was performed in the same manner as in Example 51, except that unlike in Example 51, the processing was changed to be performed in one direction and its orthogonal direction. FIG. 56 includes images illustrating the appearance of the recovered active material. FIG. 56 (a) illustrates the electrode before the processing step, FIG. 56 (b) illustrates the electrode after the processing step and before the stripping step, and FIG. 56 (c) illustrates the electrode after the stripping step.

### (Example 53)

Active material recovery was performed in the same manner as in Example 49, except that unlike in Example 49, the curvature radius of the processed shape was changed to 0.5 mm. FIG. 57 includes images illustrating the appearance of the recovered active material. FIG. 57 (a) illustrates the electrode before the processing step, FIG. 57 (b) illustrates the electrode after the processing step and before the stripping step, and FIG. 57 (c) illustrates the electrode after the stripping step.

### (Example 54)

Active material recovery was performed in the same manner as in Example 53, except that unlike in Example 53, the processing was changed to be performed in one direction and its orthogonal direction. FIG. 58 includes images illustrating the appearance of the recovered active material. FIG. 58 (a) illustrates the electrode before the processing step, FIG. 58 (b) illustrates the electrode after the processing step and before the stripping step, and FIG. 58 (c) illustrates the electrode after the stripping step.

### (Example 55)

Active material recovery was performed in the same manner as in Example 49, except that unlike in Example 49, the battery was changed to the battery B. FIG. 59 includes images illustrating the appearance of the recovered active material. FIG. 59 (a) illustrates the electrode before the processing step, FIG. 59 (b) illustrates the electrode after the processing step and before the stripping step, and FIG. 59 (c) illustrates the electrode after the stripping step.

### (Example 56)

Active material recovery was performed in the same manner as in Example 50, except that unlike in Example 50, the battery was changed to the battery B. FIG. 60 includes images illustrating the appearance of the recovered active material. FIG. 60 (a) illustrates the electrode before the processing step, FIG. 60 (b) illustrates the electrode after the processing step and before the stripping step, and FIG. 60 (c) illustrates the electrode after the stripping step.

### (Example 57)

Active material recovery was performed in the same manner as in Example 51, except that unlike in Example 51, the battery was changed to the battery B. FIG. 61 includes images illustrating the appearance of the recovered active material. FIG. 61 (a) illustrates the electrode before the processing step, FIG. 61 (b) illustrates the electrode after the processing step and before the stripping step, and FIG. 61 (c) illustrates the electrode after the stripping step.

### (Example 58)

Active material recovery was performed in the same manner as in Example 52, except that unlike in Example 52, the battery was changed to the battery B. FIG. 62 includes images illustrating the appearance of the recovered active material. FIG. 62 (a) illustrates the electrode before the processing step, FIG. 62 (b) illustrates the electrode after the processing step and before the stripping step, and FIG. 62 (c) illustrates the electrode after the stripping step.

### (Example 59)

Active material recovery was performed in the same manner as in Example 53, except that unlike in Example 53, the battery was changed to the battery B. FIG. 63 includes images illustrating the appearance of the recovered active material. FIG. 63 (a) illustrates the electrode before the processing step, FIG. 63 (b) illustrates the electrode after the processing step and before the stripping step, and FIG. 63 (c) illustrates the electrode after the stripping step.

### (Example 48)

Active material recovery was performed in the same manner as in Example 60, except that unlike in Example 54, the battery was changed to the battery B. FIG. 64 includes images illustrating the appearance of the recovered active material. FIG. 64 (a) illustrates the electrode before the processing step, FIG. 64 (b) illustrates the electrode after the processing step and before the stripping step, and FIG. 64 (c) illustrates the electrode after the stripping step.

### (Example 61)

### <Stripping Step>

In Example 1, following the processing step, the positive electrode, which was the electrode of the processed battery A, was placed in a container (made of stainless steel, 5 L water), and a shock wave was generated from the upper part of the container using an electric pulse generator (obtained from Sibata Scientific Technology Ltd.) and applied to the electrode. Then, the active material in the container after the stripping step was recovered. FIG. 65 includes images illustrating the appearance of the recovered active material. FIG. 65 (a) illustrates the electrode before the processing step, FIG. 65 (b) illustrates the electrode after the processing step and before the stripping step, and FIG. 65 (c) illustrates the electrode after the stripping step.

Conditions set in the electric pulse generator are indicated below.

### [Set conditions]

- Applied Voltage: 60 kV
- Number of pulses: 30 times
- Distance from the paired electrode of the electric pulse device: 5 cm

### (Example 62)

Active material recovery was performed in the same manner as in Example 61, except that unlike in Example 61, the processing was changed to be performed in one direction and its orthogonal direction. FIG. 66 includes images illustrating the appearance of the recovered active material. FIG. 66 (a) illustrates the electrode before the processing step, FIG. 66 (b) illustrates the electrode after the processing step and before the stripping step, and FIG. 66 (c) illustrates the electrode after the stripping step.

### (Example 63)

Active material recovery was performed in the same manner as in Example 61, except that unlike in Example 61, the curvature radius of the processed shape was changed to 1 mm. FIG. 67 includes images illustrating the appearance of the recovered active material. FIG. 67 (a) illustrates the electrode before the processing step, FIG. 67 (b) illustrates the electrode after the processing step and before the stripping step, and FIG. 67 (c) illustrates the electrode after the stripping step.

### (Example 64)

Active material recovery was performed in the same manner as in Example 63, except that unlike in Example 63, the processing was changed to be performed in one direction and its orthogonal direction. FIG. 68 includes images illustrating the appearance of the recovered active material. FIG. 68a) illustrates the electrode before the processing step, FIG. 68 (b) illustrates the electrode after the processing step and before the stripping step, and FIG. 68 (c) illustrates the electrode after the stripping step.

### (Example 65)

Active material recovery was performed in the same manner as in Example 61, except that unlike in Example 61, the curvature radius of the processed shape was changed to 0.5 mm. FIG. 69 includes images illustrating the appearance of the recovered active material. FIG. 69 (a) illustrates the electrode before the processing step, FIG. 69 (b) illustrates the electrode after the processing step and before the stripping step, and FIG. 69 (c) illustrates the electrode after the stripping step.

### (Example 66)

Active material recovery was performed in the same manner as in Example 65, except that unlike in Example 65, the processing was changed to be performed in one direction and its orthogonal direction. FIG. 70 includes images illustrating the appearance of the recovered active material. FIG. 70 (a) illustrates the electrode before the processing step, FIG. 70 (b) illustrates the electrode after the processing step and before the stripping step, and FIG. 70 (c) illustrates the electrode after the stripping step.

### (Example 67)

Active material recovery was performed in the same manner as in Example 61, except that unlike in Example 61, the battery was changed to the battery B. FIG. 71 includes images illustrating the appearance of the recovered active material. FIG. 71 (a) illustrates the electrode before the processing step, FIG. 71 (b) illustrates the electrode after the processing step and before the stripping step, and FIG. 71 (c) illustrates the electrode after the stripping step.

### (Example 68)

Active material recovery was performed in the same manner as in Example 62, except that unlike in Example 62, the battery was changed to the battery B. FIG. 72 includes images illustrating the appearance of the recovered active material. FIG. 72 (a) illustrates the electrode before the processing step, FIG. 72 (b) illustrates the electrode after the processing step and before the stripping step, and FIG. 72 (c) illustrates the electrode after the stripping step.

### (Example 69)

Active material recovery was performed in the same manner as in Example 63, except that unlike in Example 63, the battery was changed to the battery B. FIG. 73 includes images illustrating the appearance of the recovered active material. FIG. 73 (a) illustrates the electrode before the processing step, FIG. 73 (b) illustrates the electrode after the processing step and before the stripping step, and FIG. 73 (c) illustrates the electrode after the stripping step.

### (Example 70)

Active material recovery was performed in the same manner as in Example 64, except that unlike in Example 64, the battery was changed to the battery B. FIG. 74 includes images illustrating the appearance of the recovered active material. FIG. 74 (a) illustrates the electrode before the processing step, FIG. 74 (b) illustrates the electrode after the processing step and before the stripping step, and FIG. 74 (c) illustrates the electrode after the stripping step.

### (Example 71)

Active material recovery was performed in the same manner as in Example 65, except that unlike in Example 65, the battery was changed to the battery B. FIG. 75 includes images illustrating the appearance of the recovered active material. FIG. 75 (a) illustrates the electrode before the processing step, FIG. 75 (b) illustrates the electrode after the processing step and before the stripping step, and FIG. 75 (c) illustrates the electrode after the stripping step.

### (Example 72)

Active material recovery was performed in the same manner as in Example 66, except that unlike in Example 66, the battery was changed to the battery B. FIG. 76 includes images illustrating the appearance of the recovered active material. FIG. 76 (a) illustrates the electrode before the processing step, FIG. 76 (b) illustrates the electrode after the processing step and before the stripping step, and FIG. 76 (c) illustrates the electrode after the stripping step.

### (Comparative Example 1)

Active material recovery was performed in the same manner as in Example 25, except that unlike in Example 25, the processing step was not performed. FIG. 77 includes images illustrating the appearance of the recovered active material. FIG. 77 (a) illustrates the electrode without the processing step, and FIG. 77 (b) illustrates the electrode after the stripping step performed without the processing step.

### (Comparative Example 2)

Active material recovery was performed in the same manner as in Example 31, except that unlike in Example 31, the processing step was not performed. FIG. 78 includes images illustrating the appearance of the recovered active material. FIG. 78 (a) illustrates the electrode without the processing step, and FIG. 78 (b) illustrates the electrode after the stripping step performed without the processing step.

### (Comparative Example 3)

Active material recovery was performed in the same manner as in Example 37, except that unlike in Example 37, the processing step was not performed. FIG. 79 includes images illustrating the appearance of the recovered active material. FIG. 79 (a) illustrates the electrode without the processing step, and FIG. 79 (b) illustrates the electrode after the stripping step performed without the processing step.

### (Comparative Example 4)

Active material recovery was performed in the same manner as in Example 43, except that unlike in Example 43, the processing step was not performed. FIG. 80 includes images illustrating the appearance of the recovered active material. FIG. 80 (a) illustrates the electrode without the processing step, and FIG. 80 (b) illustrates the electrode after the stripping step performed without the processing step.

### (Comparative Example 5)

Active material recovery was performed in the same manner as in Example 55, except that unlike in Example 55, the processing step was not performed. FIG. 81 includes images illustrating the appearance of the recovered active material. FIG. 81 (a) illustrates the electrode without the processing step, and FIG. 81 (b) illustrates the electrode after the stripping step performed without the processing step.

### (Comparative Example 6)

Active material recovery was performed in the same manner as in Example 67, except that unlike in Example 67, the processing step was not performed. FIG. 82 includes images illustrating the appearance of the recovered active material. FIG. 82 (a) illustrates the electrode without the processing step, and FIG. 82 (b) illustrates the electrode after the stripping step performed without the processing step.

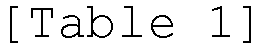

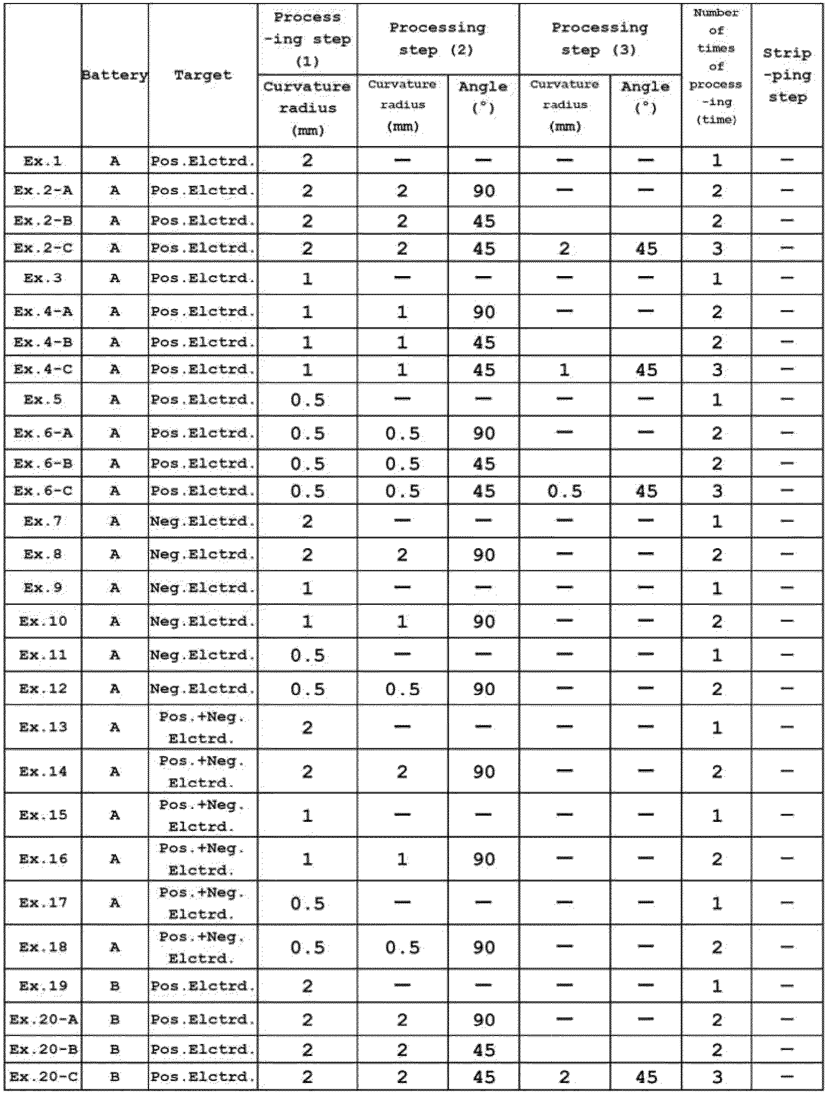

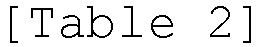

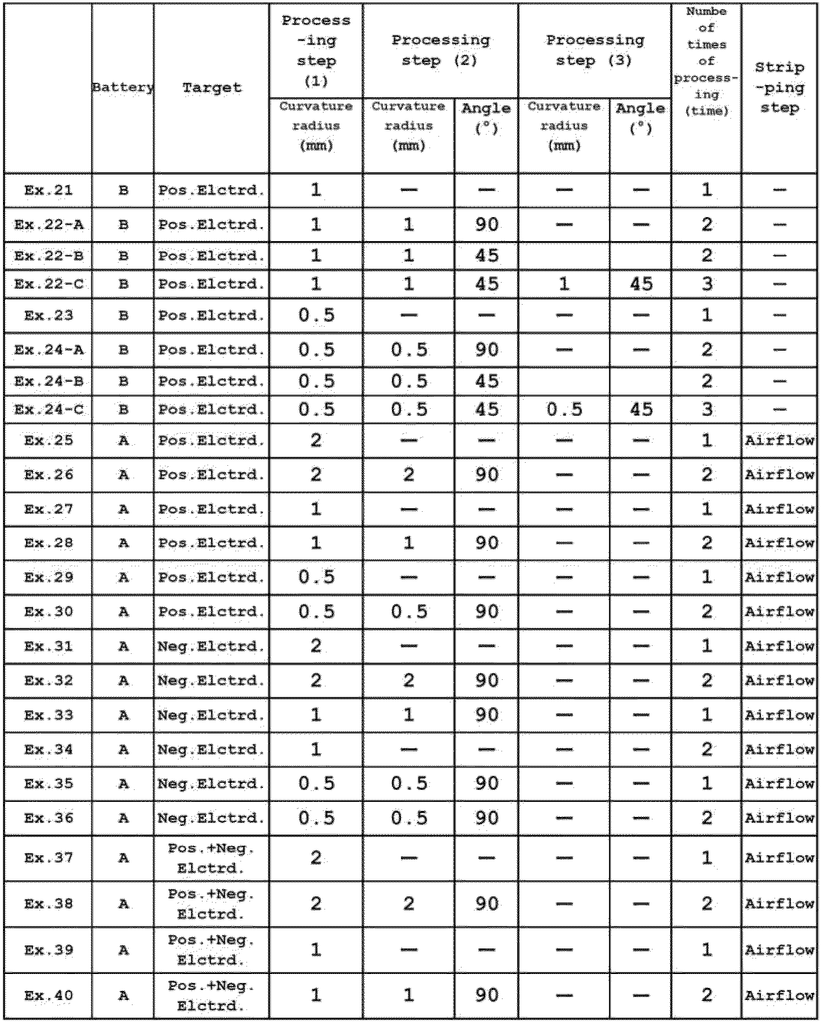

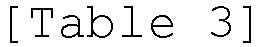

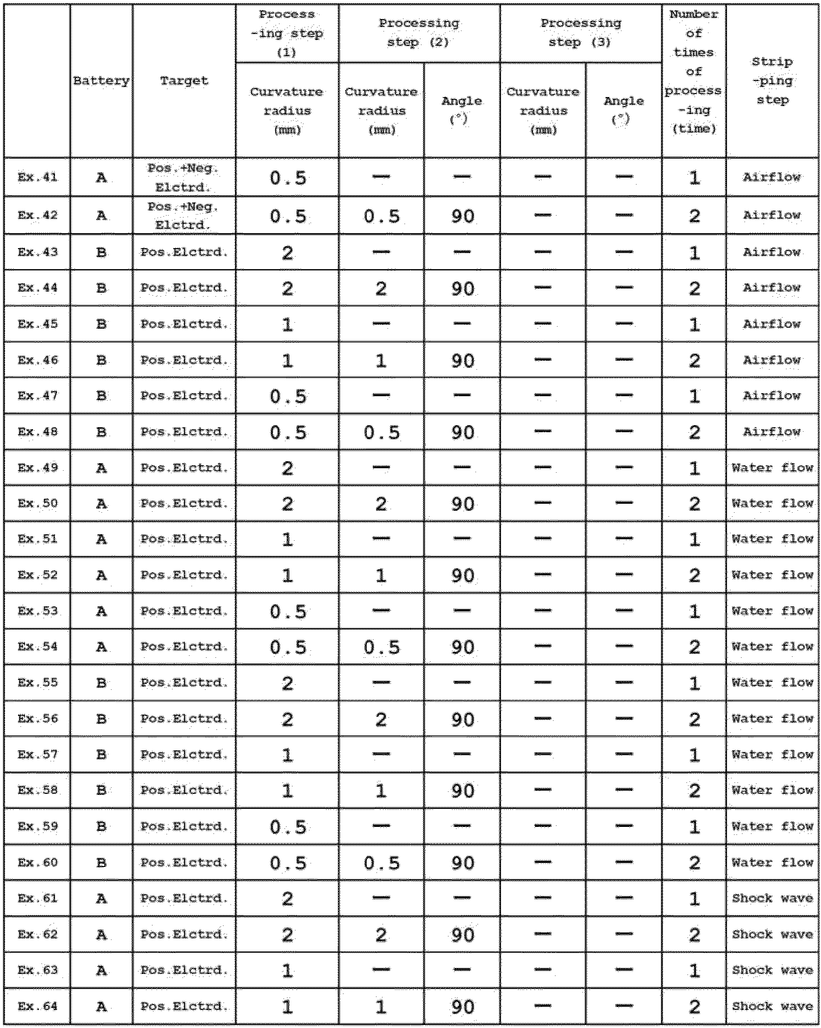

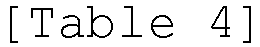

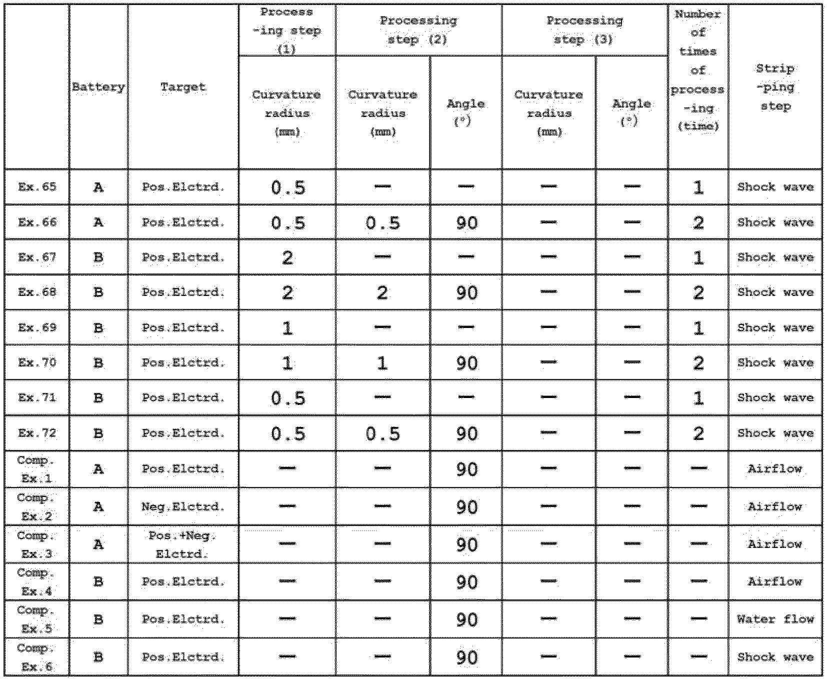

### <Evaluation>

The active material recovery efficiency (%) and the purity of the active material in Examples 1 to 72 and Comparative Examples 1 to 6 were evaluated as follows. The results are indicated in Tables 5 to 8.

### <Active Material Recovery Efficiency (1) (%)>

In Examples 1 to 72 and Comparative Examples 1 to 6, the active material recovery efficiency (%) was calculated by the following equation based on the recovery amount (g) of the active material recovered in the processing step and the weight (g) of the electrode before the stripping step.

### [Equation]

Active material recovery efficiency (%) = Recovery amount (g) of the active material in the processing step/Amount (g) of the active material adhering to the electrode × 100

### <Active Material Recovery Efficiency (2) (%)>

In Examples 1 to 72 and Comparative Examples 1 to 6, the active material recovery efficiency (%) was calculated by the following equation based on the recovery amount (g) of the active material recovered in the stripping step and the weight (g) of the electrode before the stripping step.

### [Equation]

Active material recovery efficiency (%) = Recovery amount (g) of the active material in the stripping step/Amount (g) of the active material adhering to the electrode (g) × 100 <Purity of the active material>

The contents ratios of aluminum and copper contained in the active material recovered in Examples 1 to 72 and Comparative Examples 1 to 6 were measured by an inductively coupled plasma emission method, and the amount of impurities in the active material was evaluated by weight percentage according to the following equation. (Measured by dissolving the metals contained in the active material to become solutions by microwave and acid pyrolysis)

### [Equation]

100-(aluminum content ratio (%) in the active material + copper content ratio (%) in the active material) The aluminum content ratio (%) in the active material = aluminum content (g) in the active material/weight (g) of the active material × 100 The copper content ratio (%) in the active material = copper content (g) in the active material/weight (g) of the active material × 100

### <Whether the electrode became minute>

The active material recovered in Examples 1 to 72 and Comparative Examples 1 to 6 was visually observed, and whether the electrode became minute was evaluated based on the following evaluation criteria. Amon the following evaluation criteria, "A" and "B" are the ratings indicating practical usability.

### [Evaluation criteria]

A: There were no visible minute current collectors.
B: Although there were visible minute current collectors, they could be easily separated by a sieve.
C: There were visible minute current collectors that would be difficult to separate by a sieve.

**[Table 5]**

| | **Recovery efficiency (1)** | **Recovery efficiency (2)** | **Purity (%)** | **Whether electrode became minute** |
|---|---|---|---|---|
| **Ex.1** | **3** | - | **>99** | **A** |
| **Ex.2-A** | **7** | **-** | **>99** | **A** |
| **Ex.2-B** | **17** | - | **>99** | **A** |
| **Ex.2-C** | **92** | - | **>99** | **A** |
| **Ex.3** | **5** | - | **>99** | **A** |
| **Ex.4-A** | **46** | - | **>99** | **A** |
| **Ex.4-B** | **82** | - | **>99** | **A** |
| **Ex.4-C** | **100** | - | **>99** | **A** |
| **Ex.5** | **5** | - | **>99** | **A** |
| **Ex.6-A** | **81** | - | **>99** | **A** |
| **Ex.6-8** | **93** | - | **>99** | **A** |
| **Ex.6-C** | **100** | - | **>99** | **A** |
| **Ex.7** | **38** | - | **>99** | **A** |
| **Ex.8** | **86** | - | **>99** | **A** |
| **Ex.9** | **48** | - | **>99** | **A** |
| **Ex.10** | **99** | - | **>99** | **A** |
| **Ex.11** | **81** | - | **>99** | **A** |
| **Ex.12** | **100** | - | **>99** | **A** |
| **Ex.13** | **11** | - | **>99** | **A** |
| **Ex.14** | **29** | - | **>99** | **A** |
| **Ex.15** | **12** | - | **>99** | **A** |
| **Ex.16** | **38** | - | **>99** | **A** |
| **Ex.17** | **64** | - | **>99** | **A** |
| **Ex.18** | **83** | - | **>99** | **A** |
| **Ex.19** | **30** | - | **>99** | **A** |
| **Ex.20-A** | **46** | - | **>99** | **A** |
| **Ex.20-B** | **48** | - | **>99** | **A** |
| **Ex.20-C** | **95** | - | **>99** | **A** |

**[Table 6]**

| | **Recovery efficiency (1)** | **Recovery efficiency (2)** | **Purity (%)** | **Whether electrode became minute** |
|---|---|---|---|---|
| **Ex. 21** | **74** | - | **>99** | **A** |
| **Ex.22-A** | **99** | - | **>99** | **A** |
| **Ex.22-B** | **95** | - | **>99** | **A** |
| **Ex.22-C** | **99** | - | **>99** | **A** |
| **Ex.23** | **89** | - | **>99** | **A** |
| **Ex.24-A** | **100** | - | **>99** | **A** |
| **Ex.24-B** | **95** | - | **>99** | **A** |
| **Ex.24-C** | **100** | - | **>99** | **A** |
| **Ex.25** | **6** | **15** | **>95** | **B** |
| **Ex.26** | **6** | **24** | **>99** | **A** |
| **Ex.27** | **11** | **45** | **>99** | **A** |
| **Ex.28** | **28** | **85** | **>99** | **A** |
| **Ex.29** | **12** | **95** | **>99** | **A** |
| **Ex.30** | **60** | **100** | **>99** | **A** |
| **Ex.31** | **38** | **100** | **>95** | **A** |
| **Ex.32** | **86** | **100** | **>99** | **A** |
| **Ex.33** | **48** | **100** | **>99** | **A** |
| **Ex.34** | **99** | **100** | **>99** | **A** |
| **Ex.35** | **81** | **100** | **>99** | **A** |
| **Ex.36** | **100** | **100** | **>99** | **A** |
| **Ex.37** | **11** | **39** | **>95** | **B** |
| **Ex.38** | **29** | **53** | **>99** | **A** |
| **Ex.39** | **12** | **61** | **>99** | **A** |
| **Ex.40** | **38** | **100** | **>99** | **A** |

**[Table 7]**

| | **Recovery efficiency (1)** | **Recovery efficiency (2)** | **Purity (%)** | **Whether electrode became minute** |
|---|---|---|---|---|
| **Ex.41** | **64** | **100** | **>99** | **A** |
| **Ex.42** | **83** | **100** | **>99** | **A** |
| **Ex.43** | **1** | **21** | **>95** | **B** |
| **Ex.44** | **7** | **42** | **>99** | **A** |
| **Ex.45** | **2** | **46** | **>99** | **A** |
| **Ex.46** | **48** | **94** | **>99** | **A** |
| **Ex.47** | **38** | **88** | **>99** | **A** |
| **Ex.48** | **99** | **100** | **>99** | **A** |
| **Ex.49** | **1** | **100** | **>99** | **A** |
| **Ex.50** | **6** | **100** | **>99** | **A** |
| **Ex.51** | **7** | **100** | **>99** | **A** |
| **Ex.52** | **12** | **100** | **>99** | **A** |
| **Ex.53** | **2** | **100** | **>99** | **A** |
| **Ex.54** | **57** | **100** | **>99** | **A** |
| **Ex.55** | **0** | **33** | **>99** | **A** |
| **Ex.56** | **15** | **51** | **>99** | **A** |
| **Ex.57** | **39** | **82** | **>99** | **A** |
| **Ex.58** | **97** | **100** | **>99** | **A** |
| **Ex.59** | **44** | **100** | **>99** | **A** |
| **Ex.60** | **98** | **100** | **>99** | **A** |
| **Ex.61** | **3** | **100** | **>99** | **A** |
| **Ex.62** | **7** | **100** | **>99** | **A** |
| **Ex.63** | **5** | **100** | **>99** | **A** |
| **Ex.64** | **46** | **100** | **>99** | **A** |

**[Table 8]**

| | **Recovery efficiency (1)** | **Recovery efficiecy (2)** | **Purity (%)** | **Whether electrode became minute** |
|---|---|---|---|---|
| **Ex.65** | **5** | **100** | **>99** | **A** |
| **Ex.66** | **81** | **100** | **>99** | **A** |
| **Ex.67** | **2** | **38** | **>99** | **A** |
| **Ex.68** | **19** | **48** | **>99** | **A** |
| **Ex.69** | **46** | **83** | **>99** | **A** |
| **Ex.70** | **91** | **100** | **>99** | **A** |
| **Ex.71** | **54** | **100** | **>99** | **A** |
| **Ex.72** | **99** | **100** | **>99** | **A** |
| **Comp. Ex. 1** | **-** | **13** | **>90** | **C** |
| **Comp.Ex.2** | **-** | **79** | **>95** | **A** |
| **Comp.Ex.3** | **-** | **48** | **>90** | **C** |
| **Comp.Ex.4** | **-** | **9** | **>70** | **C** |
| **Comp.Ex.5** | **-** | **6** | **>99** | **A** |
| **Comp.Ex.6** | **-** | **6** | **>99** | **A** |

This international application claims priority to Japanese Patent Application No. 2022-060609 filed March 31, 2022, and the entire contents of Japanese Patent Application No. 2022-060609 are incorporated herein by reference.

### REFERENCE SIGNS LIST

- 1: airflow nozzle
- 2: container
- 3: mesh
- 4: electrode
- 5: airflow
- 6: stirrer
- 7: water
- 8: water flow
- 9: high-voltage electric pulse generator
- 10: dielectric breakdown generating paired electrode
- 11: power source device
- 12: shock wave

## Claims

1. A method for recovering an active material from a power storage device, the method comprising:
a processing step of processing at least a part of an electrode of a power source device including the electrode to which an active material adheres, such that the part becomes a corrugated shape.

2. The method for recovering an active material from a power storage device according to claim 1, the method further comprising after the processing step:
a stripping step of stripping the active material from the electrode by applying an external stimulus to the electrode.

3. The method for recovering an active material from a power storage device according to claim 2,
wherein the corrugated shape is at least one selected from a corrugated shape throughout an entirety, a corrugated shape only at an end, and a corrugated shape in one direction of the entirety and in a direction different from the one direction.

4. The method for recovering an active material from a power storage device according to claim 1 or 2,
wherein a curvature radius of the corrugated shape is 0 mm or greater and 5 mm or less.

5. The method for recovering an active material from a power storage device according to claim 1 or 2,
wherein a curvature radius of the corrugated shape is 0 mm or greater and 0.5 mm or less.

6. The method for recovering an active material from a power storage device according to claim 2 or 3,
wherein the stripping step is performed at a temperature of 0°C or higher and 200°C or lower.

7. The method for recovering an active material from a power storage device according to claim 2 or 3,
wherein the external stimulus is an airflow.

8. The method for recovering an active material from a power storage device according to claim 7,
wherein the airflow is applied to the electrode at a wind velocity of 5 m/s or higher and 100 m/s or lower for a time of 0.5 minutes or longer and 2.0 minutes or shorter.

9. The method for recovering an active material from a power storage device according to claim 2 or 3,
wherein the external stimulus is a water flow.

10. The method for recovering an active material from a power storage device according to claim 9,
wherein the water flow is applied to the electrode at a flow velocity of 0.05 m/s or higher and 10 m/s for a time of 0.1 minutes or longer and 5.0 minutes or shorter.

11. The method for recovering an active material from a power storage device according to claim 2 or 3,
wherein the external stimulus is a shock wave.

12. The method for recovering an active material from a power storage device according to claim 11,
wherein the shock wave is applied to the electrode at an applied voltage of 10 kV or higher and 200 kV or lower, at a distance of 0.5 cm or longer and 30 cm or shorter between the electrode and a paired electrode of an electric pulse device, and at a number of times of pulsing of 1 or greater and 100 or less.
